# EUROPEAN PATENT SPECIFICATION

(11) **EP 3 488 405 B1**
(45) Date of publication and mention of the grant of the patent: **17.12.2025**
(21) Application number: 17834883.5
(22) Date of filing: 06.01.2017
(51) Int. Cl.: G06Q 20/32, G06Q 20/38, G06Q 40/06, G06Q 20/06, G06Q 20/02, G06Q 20/36, G06Q 20/40

(54) **DIGITAL PROPERTY MANAGEMENT ON A DISTRIBUTED TRANSACTION CONSENSUS NETWORK**
VERWALTUNG VON DIGITALEM EIGENTUM AUF EINEM KONSENSNETZWERK MIT VERTEILTEN TRANSAKTIONEN
GESTION DE PROPRIÉTÉS NUMÉRIQUES SUR UN RÉSEAU DE CONSENSUS DE TRANSACTIONS DISTRIBUÉ

(30) Priority: 25.07.2016 US 201662366119 P
(43) Date of publication of application: 29.05.2019
(73) Proprietor: Tbcasoft, Inc., Sunnyvale, California 94085 (US)
(72) Inventor: WU, Ling, San Jose, California 95129 (US)
(74) Representative: Michalski Hüttermann & Partner Patentanwälte mbB
(86) International application number: PCT/US2017/012613
(87) International publication number: WO 2018/022131

(56) References cited:
- US-A1- 2002 082 979
- US-A1- 2013 218 769
- US-A1- 2013 311 381
- US-A1- 2015 262 137
- US-A1- 2015 262 137
- US-A1- 2015 332 395
- US-A1- 2015 348 017
- US-A1- 2015 356 555
- US-A1- 2016 092 988
- US-A1- 2016 092 988
- US-A1- 2016 125 403
- US-A1- 2016 350 728
- US-A1- 2017 011 460
- US-B1- 7 949 606

## Description

### BACKGROUND OF THE INVENTION

### Field of the Invention

The present disclosure relates generally to systems, apparatuses, computer readable mediums and methods for digital property management, including clearing and settling transactions, using cryptographic techniques in a distributed transaction consensus network.

### Description of Related Art

Clearance and settlement of financial transactions are time consuming and expensive, in particular involving international transactions. Conventionally, financial institutions rely on a central clearing house to handle clearance and settlement. In recent years after the introduction of Bitcoin in 2009, relatively rapid clearance and settlement using cryptographic currency in a decentralized, distributed and peer to peer network, became available, although still not widely adopted. Since then, numerous cryptographic currencies have become available, such as Litecoin, Novacoin, Namecoin, Dogecoin, Peercoin, Ethereum, and Ripple.

A digital currency, such as a bitcoin, is computationally generated (minted) by an issuer. Digital currency can be stored in a virtual wallet which can employ a software and/or hardware technology. Owners need private keys, which are usually separately stored, to spend the digital currency. Digital currency can be purchased (e.g., for U.S. dollars at an ATM or at an exchange), sold (e.g., for goods and/or services), traded, or exchanged for a different currency or cryptographic currency. A transaction using digital currency, such as money transfer, is usually conducted by (1) sender exchanging US Dollars to bitcoins, (2) transferring bitcoins from a sender's virtual wallet to a recipient's virtual wallet, and (3) recipient exchanging bitcoins back to US Dollars. However, the exchange rate of digital currency, e.g. bitcoin, can fluctuate widely and cause unexpected loss. Each exchange may also incur additional fees. In addition, the fact that the private keys to virtual wallets can be stolen or lost would seriously threaten transactions relying on that digital currency.

US2016/092988 A1 describes systems and methods for transferring digital assets amongst a network of distributed users without the need to transfer the assets to an external party, such as an escrow agent. The transferring of assets may be in the form of electronic transactions between pluralities of currencies or assets. Temporary and localized escrow services may be created on a user terminal for safely overseeing the process of transferring digital assets. The trade instructions and execution orders for the transfer of assets may be validated over a de-centralized network of user terminals. This type of network allows secure peer-to-peer electronic transactions to occur between distributed and anonymous users of participants, which are assumed to be trustless. In such network, the transactions may be handled by cryptographic mathematical algorithm and which are known to be identical across all users of participants of the same network.

US 2015/0262137 A1 describes a system and method for transaction bitcoin. Bitcoin can be sent to an email address. No miner's fee is paid by a host computer system. Hot wallet functionality is provided that transfers values of some Bitcoin addresses to a vault for purpose of security. A private key of a Bitcoin address of the vault is split and distributed to keep the vault secure. Instant exchange allows for merchants and customers to lock in a local currency price. A vault has multiple email addresses to authorize a transfer of bitcoin out of the vault. User can opt to have private keys stored in locations that are under their control. A tip button rewards content creators for their efforts. A bitcoin exchange allows for users to set prices that they are willing to sell or buy bitcoin and execute such trades.

US 2015/0348017 A1 describes a method for transferring cryptocurrency between users of a social network. The method enables users of an internet capable machine, who encounter each other on a social network or their internet based communication platform to securely deposit, withdraw, send, receive or transfer definable amounts cryptocurrency between each other using an interface which integrates features of the social network using valid cryptocurrency wallets. The interactive component for initiating the cryptocurrency transfer can appear within any content seen by, interacted with and/or created by a user including both private and public interface. The method may be used to transact between any number of parties any number of transactions. The method includes means for authorizing, encrypting and/or confirming aspects of the cryptocurrency transaction and protecting the interest of all involved parties; as well as the issuance of cryptocurrency transaction fees over a social network or internet based communication platform.

US 2016/0125403 A1 describes a method of conducting an offline virtual currency transaction. The method may include steps of generating one or more virtual wallets; depositing certain amount of virtual currency in said virtual wallets; a prayer transmitting at least a portion of said virtual currency to a payee through an offline platform; and payee confirming reception of the virtual currency. In one embodiment, the step of transmitting at least a portion of said virtual currency to another user through an offline platform may include a step of scanning a QR code to transmit the virtual currency. In another embodiment, the virtual currency can also be transmitted through infrared. In a further embodiment, the step of confirming reception of the virtual currency may include a step of said payee deleting private key.

### SUMMARY

The invention is defined by the features of the independent claims. Preferred embodiments are defined by the features of the dependent claims.

The present disclosure is directed to a method and related apparatus and computer readable medium for digital property management, including clearing and settling transactions of digital properties, using cryptographic techniques in a distributed transaction consensus network.

An object of the present disclosure is to instantly clear and settle a transaction between two virtual wallets, a first virtual wallet owned by a customer of first digital property issuer and a second virtual wallet owned by a customer of second digital property issuer. Each digital property issuer can issue its own digital property. However, each virtual wallet can only store digital properties issued by the digital property issuer with which the virtual wallet is associated. Thus, when a transaction is completed, no extra action is needed for clearing and settlement between a virtual wallet owner (a customer as a sender or a recipient) and its associated digital property issuer. Once a transaction is completed, a virtual wallet owner can immediately spend his/her digital properties or convert them to physical properties, as he or she wishes, without waiting for clearance and settlement.

Additional features and advantages of the disclosure will be set forth in the descriptions that follow, and in part will be apparent from the descriptions, or may be learned by practice of the disclosure. The objectives and other advantages of the disclosure will be realized and attained by the structure and method particularly pointed out in the written description and claims thereof as well as the appended drawings.

To achieve these and/or other objects, as embodied and broadly described, the present disclosure provides a method implemented in a distributed transaction consensus network. The method comprises by a plurality of nodes (180, 190) of a distributed transaction consensus net work (100), wherein the plurality of nodes (180, 190) includes a first digital property issuer (120) and a second digital property issuer (150) which are communicatively connected to each other, the method comprising: (a) receiving a transaction request, by the distributed transaction consensus network (100), to transfer a first digital property, issued by the first digital property issuer (120) licensed to mint the first digital property which is signed by the first digital property issuer (120) and containing data structure of a financial value, a first type of digital property, and the first digital property issuer (120), from a first virtual wallet (122) associated with the first digital property issuer (120) to a first virtual treasury (121) owned by the first digital property issuer (120), wherein the first digital property is stored in the first virtual wallet (122) by determining that the data structure of the first digital property contains the first digital property issuer (120); (b) causing the second virtual wallet (152) associated with the second digital property issuer (150) to receive a second digital property, issued by the second digital property issuer (150) licensed to mint the second digital property which is signed by the second digital property issuer (150) and containing data structure of a financial value, a second type of digital property, and the second digital property issuer (150), from a second virtual treasury (151) owned by the second digital property issuer (150), wherein the second digital property is stored in the second virtual wallet (152) by determining that the data structure of the second digital property contains the second digital property issuer (150); and (c) recording the requested transaction in a distributed ledger.

It is to be understood that both the foregoing general description and the following detailed description are exemplary and explanatory and are intended to provide further explanation of the invention as claimed.

### BRIEF DESCRIPTION OF THE DRAWINGS

Figure 1 is a schematic diagram illustrating a distributed transaction consensus network.
Figure 2 is a block diagram illustrating an example node of the above network.
Figure 3 is block diagram showing digital property issuers, virtual treasuries, subscribers, and virtual wallets.
Figure 4 is a schematic diagram illustrating example network devices.
Figure 5 is a table illustrating an example of a mint transaction.
Figures 6A-C are tables illustrating an example of data structure used for a mint transaction.
Figure 7 is a table illustrating an example of a deposit transaction.
Figure 8 is a table illustrating an example of a remittance transaction between two virtual wallets.
Figures 9A-C are tables illustrating an example of data structure used for a remittance transaction between two virtual wallets.
Figure 10 is a table illustrating an alternative of the remittance transaction described in Figure 8.
Figure 11 is a table illustrating another alternative of the remittance transaction described in Figure 8.
Figure 12 is a table illustrating another example of a remittance transaction between two virtual wallets.
Figure 13 is a table illustrating an example of exposure limits set among some digital property issuers.
Figure 14 is a table illustrating 4 examples of a subtransaction between two digital property issuers with exposure limits.
Figure 15 is a table illustrating an example of setting all exposure limits of holding a specific type of digital property issued by a specific digital property issuer to zero.

### DETAILED DESCRIPTION OF PREFERRED EMBODIMENTS

The terminology used in the description presented below is intended to be interpreted in its broadest reasonable manner, even though it is used in conjunction with a detailed description of certain specific embodiments of the technology. Certain terms may even be emphasized below; however, any terminology intended to be interpreted in any restricted manner will be specifically defined as such in this Detailed Description section.

The embodiments introduced below can be implemented by programmable circuitry programmed or configured by software and/or firmware, or entirely by special-purpose circuitry, or in a combination of such forms. Such special-purpose circuitry (if any) can be in the form of, for example, one or more application-specific integrated circuits (ASICs), programmable logic devices (PLDs), field-programmable gate arrays (FPGAs), etc.

The described embodiments concern one or more methods, systems, apparatuses, and computer readable mediums storing processor-executable process steps to manage digital properties, including to instantly clear and settle transactions of digital properties between two virtual wallets, based on cryptographic technology in a distributed transaction consensus network, in order to eliminate the risks, complication, and time-consumption associated with traditional clearing and settlement proceedings. Various cryptographic algorithms known to people with ordinary skill in the art can be used.

In one embodiment, as shown in FIG. 1, a distributed transaction consensus network 100, referred to as TBCA (The BlockChain Alliance) Network in this disclosure, using cryptographic technology, is implemented to manage digital properties, in particular, to substantially simplify clearance and settlement process of transactions. TBCA Network 100 comprises a plurality of nodes, including an administrator 110, digital property issuers 120, 130, 140,150, miners 130, 140, 160, 170 and other nodes 180, 190. As shown in FIG. 2, each node usually comprises a processor to perform calculations and execute programs; a memory to store software, programs, and data; a display to communicate with users; an input/output component to communicate with users and other devices, and a network component to connect with network via wiring or wireless channels.

The administrator 110, referred to as TBCA in this disclosure, sets rules and manages the TBCA Network 100. The administrator 110 can issue digital fee tokens, referred to as T coin ($T) in this embodiment. The administrator 110 has a virtual treasury (not shown) to store digital fee tokens issued by itself or digital properties issued by other digital property issuers 120-150. The administrator 110 can admit a node to join the distributed transaction consensus network 100 (TBCA Network) and become a member of the network. In addition, the administrator 110 (TBCA) can authorize a digital property issuer 120-150 to issue various digital properties, such as digital currencies, digital securities, digital bonds, digital futures, and digital precious metals.

A digital property issuer, e.g. 120, 150, can issue its own digital properties. In one embodiment, a digital property issuer can be a bank, e.g. Bank of American ("BOA") or Chase; an investment/trading institute, e.g. Fidelity or Goldman Sachs; or a telecom operator, e.g. AT&T Inc. (ATT), SoftBank Corp. (SBT), or Chunghwa Telecom. In one embodiment, a digital property can be any of digital currencies, digital securities, digital bonds, digital futures, digital precious metals or digital fee tokens. As shown in FIG. 3, the digital property issuer 120, 150 can respectively have a virtual treasury 121, 151 to store various digital properties issued by itself, other digital property issuers, or the administrator 110. Each virtual treasury has a virtual treasury ID, which in some embodiment can be the virtual treasury address. In addition, each virtual treasury has a public key and a private key. To spend the digital property stored in the virtual treasury, a digital property issuer has to use the private key associated with the virtual treasury to sign transactions.

A miner 130, 140, 160, 170 can record validated transactions in a distributed ledger (open to a member/node of TBCA Network 100). In exchange for the service a miner provides, the miner may receive a reward, such as T coin issued by the administrator 110 (TBCA) and/or digital properties issued by digital property issuers, which can be stored in a miner's virtual treasury (not shown). A distributed ledger is essentially a digital property database or data structure that can be shared across a distributed transaction consensus network of multiple nodes in various sites, geographies or institutions. All nodes within the network can have their own identical copy of the ledger. Any changes to the ledger are reflected in all copies in minutes, or in some cases, seconds. The security and accuracy of the digital properties stored in the ledger are maintained cryptographically through the use of keys and signatures to control who can do what within the distributed ledger. In an embodiment, a blockchain data structure is used for a distributed ledger. A miner can create a new block to record validated transactions, and then propagate the new block to other nodes of the network. However, a distributed ledger can use any other data structure known to people with ordinary skill in the art.

To maximize the throughput of new block generation so that the TBCA Network 100 can complete an enormous number of transactions instantly, the administrator 110 can manage the number of miners, and/or set rules for miners to compete against and/or support with each other, and/or designate one or more miners to generate a new block for recording transactions. A digital property issuer 130, 140 can also be a miner. Other nodes 180, 190 can be admitted to join the TBCA Network 100 for other functions. For example, they can be verifiers to verify transactions and blocks, and then store a complete or partial copy of the distributed ledger.

Customers (referred to as "subscribers") of a digital property issuer can open and own one or more virtual wallets associated with the digital property issuer. Each virtual wallet has a virtual wallet ID, which in some embodiment can be the virtual wallet address. In addition, each virtual wallet has a public key and a private key. To spend the digital property stored in his or her virtual wallet, a subscriber has to use the private key associated with the virtual wallet to sign transactions. A subscriber can open and own virtual wallets at one or more digital property issuers. In one embodiment as shown in FIG. 3, a virtual wallet 122, 152 is provided to store, send, receive, and manage digital properties, including multiple types of digital assets, credits, and obligations, such as digital currencies, digital securities, digital bonds, digital futures, digital precious metals and digital fee tokens, for a subscriber, e.g. an individual, investor, and/or trader. In one embodiment, a virtual wallet may be an electronically maintained data file which may comprise authentication information, rules for use, sub-wallets (e.g., for separately maintaining digital currency related information, digital security related information, digital bonds related information, and digital futures related information). In addition, a subscriber may establish rules for the virtual wallet to facilitate electronic transactions.

Each virtual wallet 122, 152 is associated with a digital property issuer 120, 150 and can be identified by a virtual wallet ID (or address in some embodiment), e.g. 1F1tAaz5x1HUXrCNLbtMDqcw6o5GNn4xq and 16ULZUJwv1HZJkFrs8aa9c3xHTjiayyTNS. In one embodiment, a virtual wallet 122 can only store, send, receive, and manage various digital properties issued by the digital property issuer 120, with which the virtual wallet 122 is associated, rather than digital properties issued by other digital property issuers.

Each transaction is recorded by a miner in a distributed ledger which is open to other nodes within the TBCA Network 100. In one embodiment, the distributed ledger comprises blocks in chain. Each block is identified by a block hash, made by hashing the block header twice through the SHA256 cryptographic algorithm. In addition, each block is referenced back to a previous block, known as the parent block, through a "previous block hash" field in the block header. Thus, the sequence of hashes links each block to its parent to create a chain going back all the way to the first block ever created. As the blocks pile on top of each other, it becomes exponentially harder to reverse the transactions. Therefore, transactions recorded in the blocks become more and more trusted over the time. Depending on the size of the block and transactions, an average block can contain several hundreds of transactions. A complete and up-to-date distributed ledger is stored in a database (or a file) of the administrator, digital property issuers, miners, and other nodes admitted by the administrator 110 to store such ledger ("full node"). Some nodes can select to store only a portion of such ledger.

As shown in FIG. 3, customers of digital property issuers can request, via a network device (connected to any Internet connection via mobile, WiFi, or wired channel), such as a server, a desktop computer, a laptop computer, a tablet, a mobile phone, a landline phone, and a PDA, a transaction to be processed and recorded by the TBCA Network 100. In one embodiment, the fundamental building block of digital property transactions is an unspent transaction output ("UTXO"). A UTXO is an indivisible chunk of digital property locked by a private key to a specific virtual wallet or virtual treasury and can be any arbitrary value. A customer's virtual wallet may comprise many UTXO from hundreds of prior transactions recorded in hundreds of blocks. The customer can request a transaction to transfer a specific value of the digital property to a restaurant, e.g. to pay for a meal. The transaction may comprise one or more transaction inputs (input UTXO) from the customer's virtual wallet and one or more transaction outputs (output UTXO) to receiving virtual wallets, e.g. meal value to the restaurant and the change back to the customer). Transaction inputs are pointers to UTXO that are generated from prior transactions and never spent before. Transaction outputs are UTXO locked to receiving virtual wallets, which can be spent by their owners in the future. As a general rule, the sum of value of transaction inputs should be equal to the sum of value of transaction outputs. No value should be generated or lost in a regular digital property transaction. Exception includes but not limited to mint transaction, which digital property issuers employ to issue new digital properties, and exposure limit transaction, which digital property issuers employ to set exposure limit of holding specific types of digital properties issued by other digital property issuers.

In one embodiment, a customer's transaction request is sent to a wallet server which collects all necessary information and sends it to a middleware. The middleware constructs a raw transaction and sends it back to the wallet server which then sends it to a key server for the customer's signature using his or her private key for the virtual wallet. Wallet server passes the signed transaction back to the middleware, which propagates the transaction to the TBCA Network 100. The wallet server, key server, and middleware are software to facilitate the implementation of a transaction. After receiving the transaction, nodes on the TBCA Network 100, including digital property issuers and miners, will independently verify and validate the transaction, and then add the validated transaction to the transaction pool. Each node independently validates every transaction using the same criteria before propagating it further. A miner will create a new block pulling the transactions from the transaction pool. After it verifies and validates the new block, the miner then propagates the new block to other nodes. After receiving the new block, the nodes on the TBCA Network 100 will independently verify and validate the new block using the same criteria. Once a node has validated a new block, it will then connect the new block to its existing blockchain. Then, the new owners can spend the output UTXO from these transactions. Eventually, each full node on the TBCA Network 100 will have a copy of the same ledger, or blockchain, unless the TBCA Network 100 is attacked, disconnected, or failed. A consensus requiring that a plurality of nodes, each of which independently verifies the same transactions and/or blocks with the same criteria, reach an agreement on the distributed ledger is a mechanism to enhance the security of transactions. The more nodes a distributed transaction consensus network requires to reach a consensus, the more secured the network is. Whether a consensus is reached can be determined by various rules and/or algorithms known to skilled people in the art. In one embodiment, when forking occurs, a consensus can be reached by comparing the length (or depth) of blocks in the chain and the fork having a longer chain wins, such as by the algorithm adopted in Bitcoin network. The more computational power a miner or a group of miners collectively have, the more blocks they can generate under the proof of work approach. In other words, the blocks that are accepted by a miner or miners collectively having majority of computational power would become consensus later adopted by other nodes. In another embodiment, a consensus can be reached by a majority of miners. Thus, blocks that are validated by a majority of miners will be propagated to other nodes for verification and recording. As a distributed transaction consensus network, the TBCA Network 100 needs to reach a consensus on each transaction, which is then respectively recorded in the distributed ledger stored in a plurality of nodes.

As discussed before, each virtual wallet is associated with a specific digital property issuer which can be a bank, a financial institute, a security trading company, an investment company, a telecom operator, etc. Each virtual wallet has a unique virtual wallet ID in TBCA Network 100. For example, Mary, as a subscriber, can have a plurality of virtual wallets, each of which is identified by a virtual wallet ID and respectively associated with Bank of American ("BOA"), Fidelity, or Goldman Sachs via an account number, or with AT&T Inc. (ATT), SoftBank Corp. (SBT), or Chunghwa Telecom via a telephone number. In one embodiment, each virtual wallet can only store digital properties issued by the digital property issuer with which the virtual wallet is associated. For example, Mary's virtual wallet associated with Bank of America can only store digital properties issued by Bank of America; Mary's virtual wallet associated with ATT can only store digital properties issued by ATT.

Each digital property issuer can issue various different types of digital properties, such as digital currencies, e.g. digital US Dollars, digital Japanese Yens, digital Euros, and digital New Taiwan Dollars; digital securities, e.g. digital Apple stocks, digital Google stocks, and digital mutual funds; digital precious metals, e.g. digital gold, digital platinum, and digital silver; and digital futures, e.g. digital futures of coffee beans, soy beans, and corns. Each digital property is characterized by the combination of both the type of digital property and its issuer. In one embodiment, the combination can be a symbol for the type of digital property followed by a symbol for the digital property issuer with a dot separating both symbols. In one example, Bank of America (whose symbol is "BOA") can issue both digital US Dollars (whose symbol is "$USD") and digital Japanese Yens (whose symbol is "$JPY"), which, in this embodiment, can be identified as $USD.BOA (1 $USD.BOA is valued at 1 US Dollar in this embodiment) and $JPY.BOA (1 $JPY.BOA is valued at 1 Japanese Yen in this embodiment). In another example, Fidelity (whose symbol is "FDT") can issue both digital Apple stocks and digital Google stocks, which, in this embodiment, can be identified as AAPL.FDT (1 AAPL.FDT is valued at 1 Apple stock share in this embodiment) and GOOG.FDT (1 GOOG.FDT is valued at 1 Google stock share in this embodiment). Goldman Sachs ("GMS") can issue both digital gold with 24 karat purity (whose symbol is "GLD999") and digital platinum with 999 purity (whose symbol is "PTN999"), which, in this embodiment, can be identified as GLD999.GMS (1 GLD999.GMS is valued at 1g of gold with 24 karat purity in this embodiment) and PTN999.GMS (1 PTN999.GMS is valued at 1g of platinum with 999 purity in this embodiment).

In one embodiment, a Favored Coin ("FC") field is used to indicate the type of digital property and its issuer. As an example, FC equals to 10 to indicate digital US Dollars issued by SBT ($USD.SBT); FC equals to 11 to indicate digital Japanese Yens issued by SBT ($JPY.SBT); FC equals to 20 to indicate digital US Dollars issued by ATT ($USD.ATT); FC equals to 21 to indicate digital Japanese Yens issued by ATT ($JPY.ATT). In addition to the value (or amount or unit of digital property), each output UTXO includes the FC field to indicate the type of digital property and its issuer.

A digital property issuer can determine the actual financial value of the digital property it issues. In one embodiment, the financial value of a digital property can be recognized only by its issuer. Thus, an owner of a digital property can only claim its financial value against its issuer. In such an embodiment, a digital property functions like a digital property issuer's credit (referred to as "crypto credit") to the owner or other digital property issuer who receives the digital property.

Each digital property issuer can have a virtual treasury to store digital properties issued by itself, other digital property issuers, and the administrator 110, including multiple types of digital assets and obligations, such as digital currencies, digital securities, digital bonds, digital futures, digital precious metals and digital fee tokens. For example, Bank of America's virtual treasury can store digital US Dollars issued by itself ($USD.BOA) and digital Japanese Yen issued by The Bank of Tokyo-Mitsubishi UFJ, Ltd. ("BTMU") ($JPY.BTMU).

The described embodiments can substantially reduce the efforts of clearing and settlement in transactions between two virtual wallets. Because each virtual wallet can only store digital properties issued by the digital property issuer with which the virtual wallet is associated, when a transaction is completed, no extra action is needed for clearing and settlement between a virtual wallet owner (a sender or a recipient) and its associated digital property issuer. Thus, a virtual wallet owner does not need to wait for clearance and settlement when he/she wants to spend his/her digital properties or to convert them to physical properties. Furthermore, no extra action is needed for clearing between digital property issuers since the amount of digital properties issued by a first digital property issuer and stored in a virtual treasury of a second digital property issuer simply reflects the first digital property issuer's liability to the second digital property issuer, and vice versa. And the first digital property issuer can always redeem, at any time, the digital property (issued by the first digital property issuer) from the second digital property issuer to settle the liability between them, if there is any. In the situation where the virtual treasury of second digital property issuer needs to transfer digital properties to the virtual treasury of first digital property issuer, the virtual treasury of second digital property issuer will as a priority transfer the digital property issued by the first digital property issuer (offset), if possible; and then transfer the remaining amount/value of digital properties issued by itself (second digital property issuer). Thus, the credits or liabilities between the first digital property issuer and the second digital property issuer would be maintained at a minimum number, if there is any. Via this approach, a digital property issuer can minimize its holding of digital property issued by other digital property issuers.

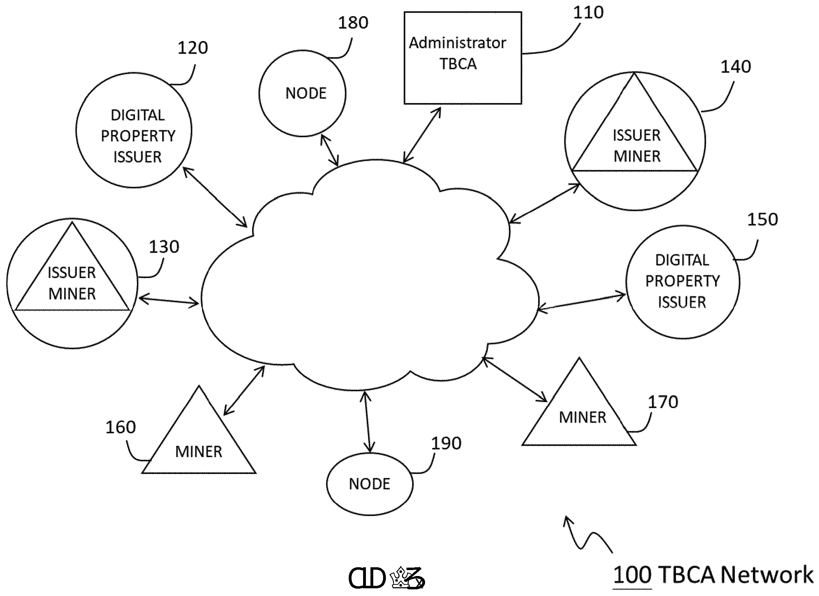

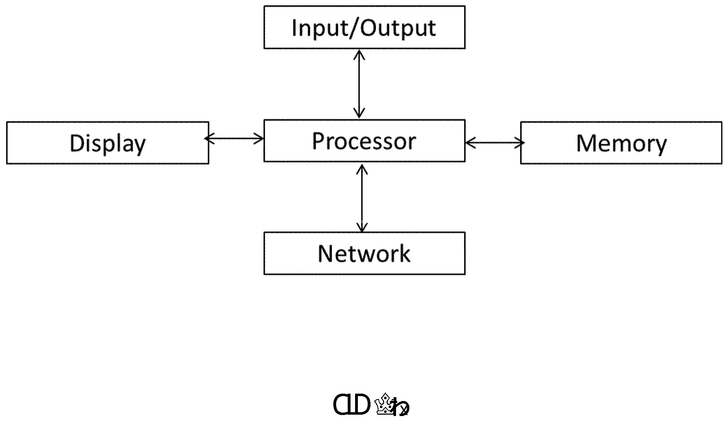

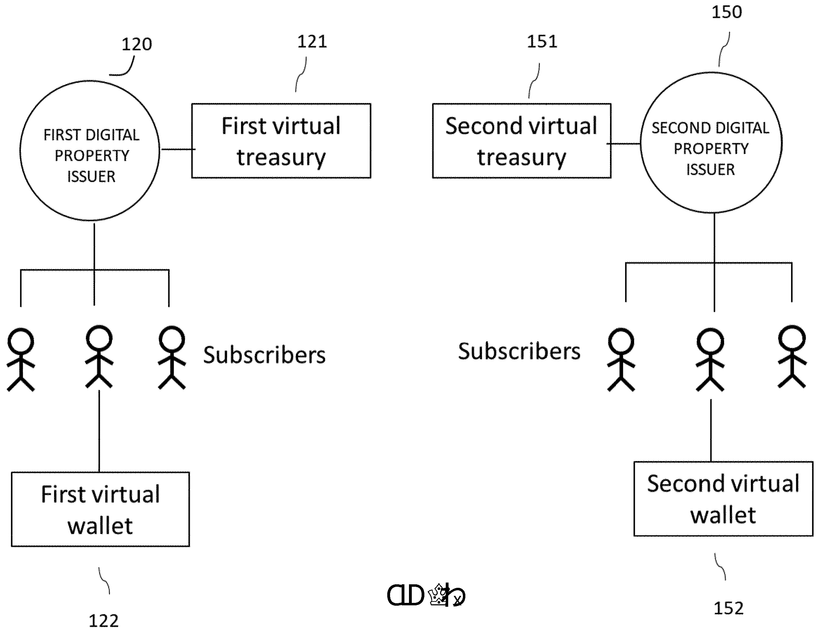

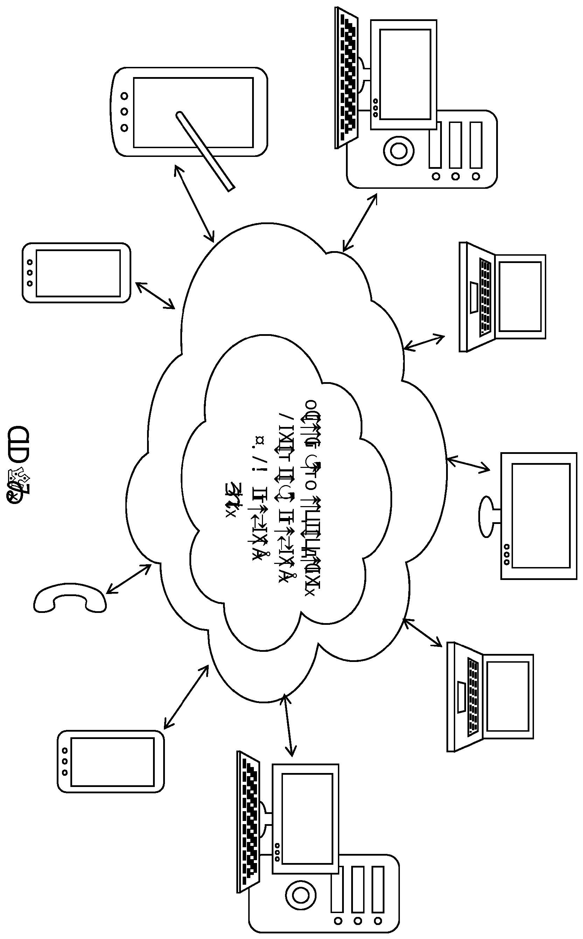

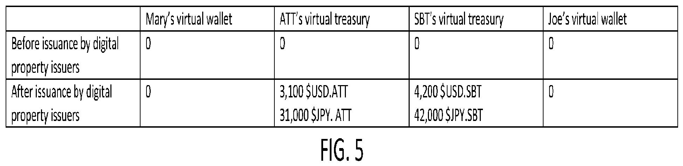

In a first embodiment (mint transaction), as shown in FIG. 5, with the administrator's permission, ATT issues (mints) 3,100 units of digital US Dollars (3,100 $USD.ATT) and 31,000 units of digital Japanese Yens (31,000 $JPY.ATT) stored in ATT's virtual treasury; SBT issues 4,200 units of digital US Dollars (4,200 $USD.SBT) and 42,000 units of digital Japanese Yens (42,000 $JPY.SBT).

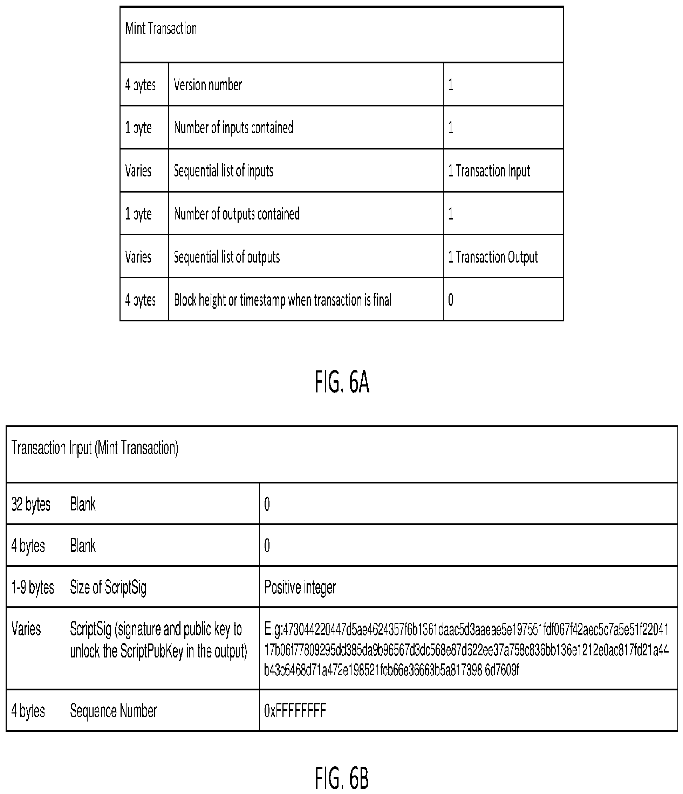

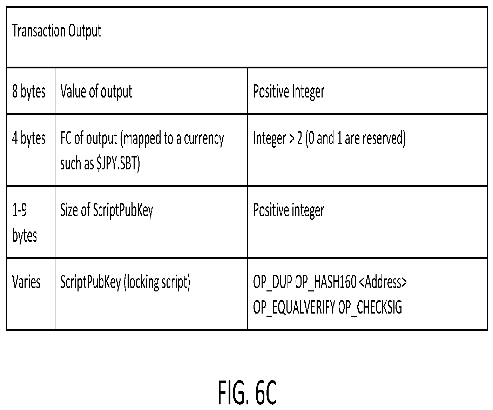

To mint digital properties, first of all, a digital property issuer has to be granted a license for minting a specific type of digital property. In some situations, the mint license can limit the amount (value) of the type of digital property to be minted. In one embodiment, the administrator 110 has to create an administrator token UTXO which can be used in a special license transaction as the input UTXO. In this license transaction, an output UTXO is created to the virtual treasury of receiving digital property issuer, with the FC field indicating the specific type of digital property it is allowed to mint. After the license transaction is constructed and signed, the middleware sends it to the TBCA Network 100, a miner of which will record the license transaction into a new block. Then, the digital property issuer can send a mint request to the wallet server, which then sends the necessary information to the middleware to generate a raw transaction. The raw transaction is then sent to the wallet server, which passes it to the key server to sign with the virtual treasury's private key. After it returns, the middleware sends it to the TBCA Network 100. A miner will record the new mint transaction in a block if the digital property issuer has the appropriate mint license. Otherwise, the miner of TBCA Network 100 will reject the mint transaction. FIGS. 6A-C illustrate an embodiment of the data structure of a mint transaction and its transaction input and output. The mint transaction has an empty input UTXO list because new digital property is being created. However, transaction input has a ScriptSig containing signature and public key of the virtual treasury of the digital property issuer that mints new digital property. The output UTXO of the mint transaction has the value and FC indicating the amount and the type of digital property to be minted, and contains a script locking the output UTXO to the virtual treasury of the digital property issuer that mints. In the above embodiment, ATT issues 3,100 units of digital US Dollars (3,100 $USD.ATT) and 31,000 units of digital Japanese Yens (31,000 $JPY.ATT) stored in ATT's virtual treasury. ATT needs two mint licenses to accomplish these two mint transactions respectively for digital US Dollars and digital Japanese Yens. After TBCA Network 100 records the two mint transactions in a new block (or two blocks), ATT's virtual treasury has two output UTXO, including the first one with value of 3,100 and FC of 20 and the second one with value of 31,000 and FC of 21.

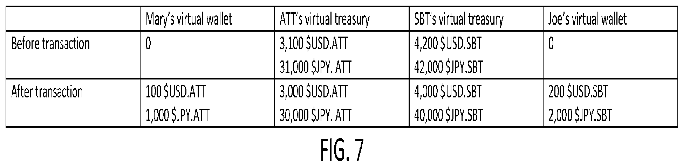

In a second embodiment (deposit transaction), Mary purchases 100 $USD.ATT and 1,000 $JPY.ATT from ATT, and then stores them in her virtual wallet 122 (associated with ATT) with ID# (address) 1F1tAaz5x1HUXrCNLbtMDqcw6o5GNn4xq; Joe purchases 200 $USD.SBT and 2,000 $JPY.SBT from SBT, and then stores them in his virtual wallet 152 (associated with SBT) with ID# (address) 16ULZUJwv1HZJkFrs8aa9c3xHTjiayyTNS. As shown in FIG. 7, after the transfer, ATT's virtual treasury stores 3,000 digital US Dollars issued by ATT (3,000 $USD.ATT) and 30,000 digital Japanese Yens issued by ATT (30,000 $JPY.ATT). SBT's virtual treasury stores 4,000 digital US Dollars issued by SBT (4,000 $USD.SBT) and 40,000 digital Japanese Yens issued by SBT (40,000 $JPY.SBT). Mary's virtual wallet contains 100 digital US Dollars issued by ATT (100 $USD.ATT) and 1,000 digital Japanese Yens issued by ATT (1,000 $JPY.ATT). Joe's virtual wallet contains 200 digital US Dollars issued by SBT (200 $USD.SBT) and 2,000 digital Japanese Yens issued by SBT (2,000 $JPY.SBT).

In the above deposit transaction, Mary purchases 100 $USD.ATT and 1,000 $JPY.ATT from ATT, which are deposited into her virtual wallet 122 (associated with ATT). To accomplish this deposit transaction, Mary's wallet sends two deposit requests to a wallet server, including the first one for 100 $USD.ATT and the second one for 1,000 $JPY.ATT. The first deposit request, including the information of value of 100, FC of 20, and Mary's virtual wallet ID, is sent to the middleware, which then constructs a raw transaction and sends it back to wallet server. The wallet server passes the raw transaction to key server for ATT's virtual treasury to sign with its private key and then sends the signed transaction back to the middleware. The middleware propagates the signed deposit transaction to the TBCA Network 100, a miner of which validates the deposit transaction and records it into a new block. The input UTXO of the first deposit transaction is the output UTXO from ATT's mint transaction. The first deposit transaction has two output UTXO. The first output UTXO of the first deposit transaction has the value of 100, FC of 20, and script locking this UTXO to Mary's virtual wallet. The second output UTXO has the value of 3,000, FC of 20, and script locking this UTXO to ATT's virtual treasury. The second deposit request, including the information of value of 1,000, FC of 21, and Mary's virtual wallet ID, is sent to the middleware, which then constructs a raw transaction and sends it back to wallet server. Through similar process, a miner of the TBCA Network 100 records the second deposit transaction into a new block. The input UTXO of the second deposit transaction is another output UTXO from ATT's mint transaction. The second deposit transaction also has two output UTXO. The first output UTXO of the second deposit transaction has the value of 1,000, FC of 21, and script locking this UTXO to Mary's virtual wallet. The second output UTXO has the value of 30,000, FC of 21, and script locking this UTXO to ATT's virtual treasury. After the deposit transactions are completed, Mary can spend these output UTXO immediately.

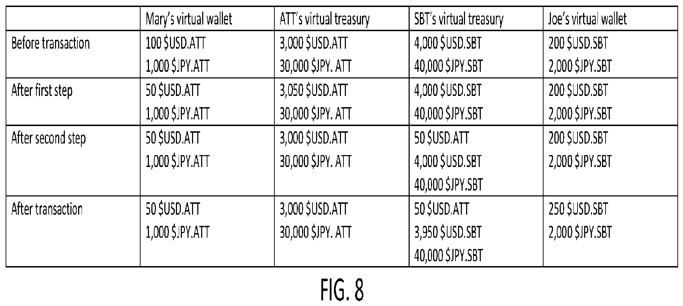

In one embodiment, Mary wants to send some money to Joe. Mary can specify the type and amount of the digital property she wants to send to Joe from her virtual wallet. In addition, Mary can specify the type of the digital property Joe will receive. In a third embodiment (remittance transaction), Mary can request (1) transferring from her own virtual wallet 50 digital US Dollars issued by ATT (50 $USD.ATT) to Joe, and (2) Joe receiving digital US Dollars issued by SBT. (Since only digital US Dollars are involved in this transaction, the amount of digital Japanese Yens stored in each virtual wallets and virtual treasuries will be omitted in the following description.) To complete this transaction, as shown in FIG. 8, a 3-step (3-subtransaction) process is implemented so that Joe will receive digital US Dollars issued by SBT ($USD.SBT). These 3 subtransactions to complete the remittance transaction are collectively referred to as a transaction set. (Please note that each subtransaction can be considered as a transaction by the TBCA Network 100 in some circumstances.) The first step (first subtransaction) is that 50 digital US Dollars issued by ATT (50 $USD.ATT) at Mary's virtual wallet is transferred to ATT's virtual treasury. As a result, Mary's virtual wallet contains 50 $USD.ATT while ATT's virtual treasury contains 3,050 $USD.ATT. The second step (second subtransaction) is that ATT's virtual treasury transfers 50 digital US Dollars issued by ATT (50 $USD.ATT) to SBT. As a result, ATT's virtual treasury contains 3,000 $USD.ATT. SBT's virtual wallet contains 50 $USD.ATT and 4,000 $USD.SBT. The third step (third subtransaction) is that SBT's virtual treasury transfers 50 digital US Dollars issued by SBT (50 $USD.SBT) to Joe's virtual wallet. As a result, SBT's virtual treasury contains 50 $USD.ATT and 3,950 $USD.SBT. Joe's virtual wallet contains 250 $USD.SBT, only digital property issued by SBT.

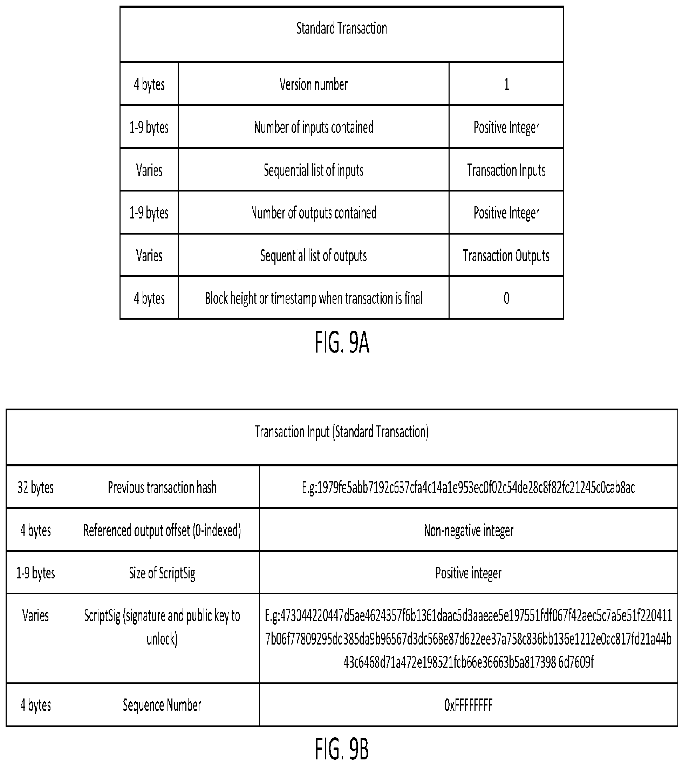

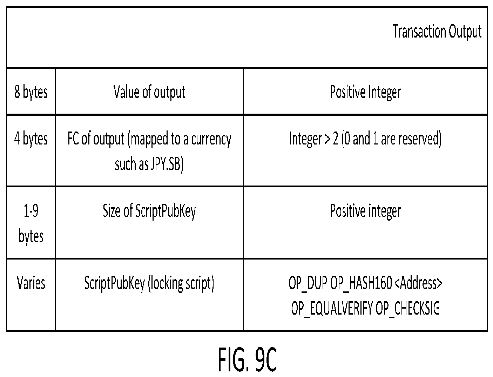

In the above remittance transaction, Mary transfers 50 $USD.ATT from her virtual wallet associated with ATT to Joe's virtual wallet associated with SBT. To accomplish this remittance transaction, three subtransactions (a transaction set) must be validated and confirmed as a whole. If one subtransaction is rejected, all three subtransactions have to be rejected. FIGS. 9A-C illustrate an embodiment of the data structure of a remittance transaction and its transaction inputs and outputs. The first subtransaction has the input UTXO from Mary's virtual wallet with value of 100 and FC of 20 and two output UTXO, the first one with value of 50 and FC of 20 locked to ATT's virtual treasury and the second one (the change back to Mary) with value of 50 and FC of 20 locked to Mary's virtual wallet. The second subtransaction has the input UTXO from ATT's virtual treasury with value of 3,000 and FC of 20 and two output UTXO, the first one with value 50 and FC 20 locked to SBT's virtual treasury and the second one (the change back to ATT) with value of 2,500 and FC of 20 locked to ATT's virtual treasury. The third subtransaction has the input UTXO from SBT's virtual treasury with value of 4,000 and FC of 10 and two output UTXO, the first one with value of 50 and FC of 10 locked to Joe's virtual wallet and the second one (change back to SBT) with value of 3,500 and FC of 10 locked to SBT's virtual treasury. With all necessary information, the middleware constructs the 3 raw subtransactions and sends them to wallet server, which further passes them to key server for appropriate signatures. The wallet server sends the 3 signed subtransacions back to the middleware, which propagates them to the TBCA Network 100. A miner will verify and validate these 3 subtransactions, which will be written into a new block only if all three subtransactions are validated. The new block will then be propagated to other nodes, which will independently verify the new block using the same criteria. Eventually, each node's ledger will include this new block recording the remittance transaction. Joe can spend the newly received 50 digital US Dollars immediately.

In a fourth embodiment, ATT may charge Mary a transaction fee which can be deducted from the 50 $USD.ATT withdrawn from Mary's virtual wallet (Joe will receive less) or be an extra and separate charge to Mary's virtual wallet. Similarly, SBT may charge Joe a transaction fee which can be deducted from the amount of digital US Dollars received from Mary (Joe will receive less) or be an extra and separate charge to Joe's virtual wallet. In addition, the administrator 110 (TBCA) may charge ATT and SBT a transaction fee which can be paid by T coins issued by the administrator 110 in this embodiment. Furthermore, a miner which creates a new block to record the transaction may be rewarded with T coins issued by the administrator 110. Several measures can be taken to complete a transaction with transaction fees paid to ATT, SBT, a miner, and/or the administrator. First, the value of input UTXO or output UTXO can be adjusted accordingly to reflect transaction fees. Second, one or more output UTXO with the value of transaction fees can be added to the appropriate subtransactions. Third, one or more subtransactions can be added to the transaction set if a separate miner or administrator 110 charges transaction fees as well.

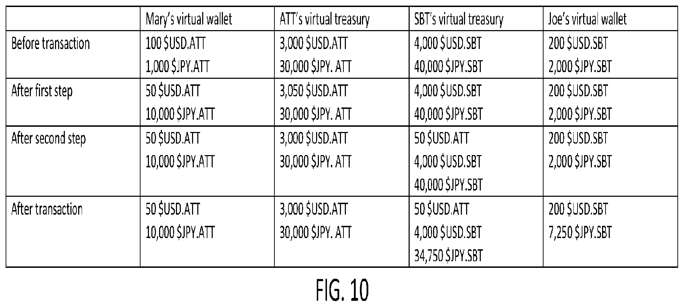

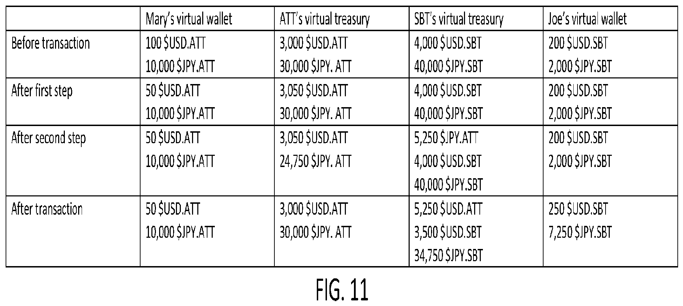

In a fifth embodiment, Mary can request (1) transferring from her own virtual wallet 50 digital US Dollars issued by ATT (50 $USD.ATT) to Joe, and (2) Joe receiving digital Japanese Yens. To complete this transaction, Mary can exchange her digital US Dollars to digital Japanese Yens at ATT's virtual treasury. ATT's virtual treasury will withdraw 50 $USD.ATT from Mary's virtual wallet and deposit 5,250 $JPY.ATT back to Mary's virtual wallet, assuming that the exchange rate is 1 digital US Dollars for 105 digital Japanese Yens. Afterwards, Mary can request (1) transferring from her own virtual wallet 5,250 digital Japanese Yens issued by ATT (5,250 $JPY.ATT) to Joe, and (2) Joe receiving digital Japanese Yens. This remittance transaction can be completed following the similar process described in the third embodiment. Alternatively, as shown in FIG. 10, a 3-step (3-subtransaction) process is implemented so that Joe will receive digital Japanese Yens issued by SBT ($JPY.SBT) without advanced exchange. The first two steps can be the same as those in the third embodiment. In the third step (third subtransaction), SBT's virtual treasury transfers 5,250 digital Japanese Yens issued by SBT to Joe's virtual wallet (5,250 $JPY.SBT) (using the above exchange rate). As another alternative shown in FIG. 11, in the second step (second subtransaction), ATT's virtual treasury can transfer 5,250 digital Japanese Yens issued by ATT (5,250 $JPY.ATT) to SBT's virtual treasury, instead of 50 digital US Dollars (50 $USD.ATT). Actually, ATT may pay SBT any other type of digital property with equivalent value of 5,250 digital Japanese Yens as long as SBT agrees to receive it.

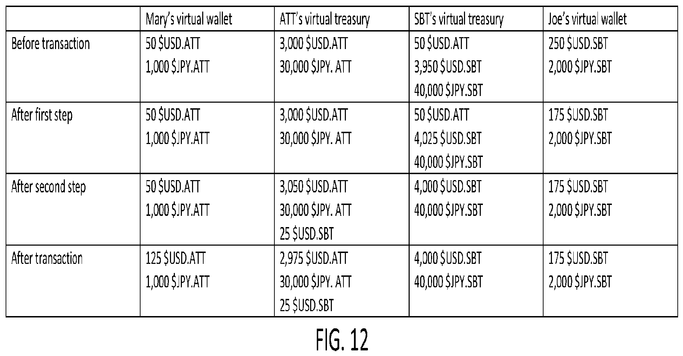

In a sixth embodiment following the transaction completed in the third embodiment (see FIG. 8), Joe requests (1) transferring from his own virtual wallet 75 digital US Dollars issued by SBT (75 $USD.SBT) to Mary, and (2) Mary receiving digital US Dollars. (Since only digital US Dollars are involved in this transaction, the amount of digital Japanese Yens stored in each virtual wallet and virtual treasury will be omitted in the following description.) To complete this remittance transaction, as shown in FIG. 12, a 3-step (3-subtransaction) process is implemented so that Mary will receive digital US Dollars issued by ATT ($USD.ATT). The first step (first subtransaction) is that 75 digital US Dollars issued by SBT (75 $USD.SBT) at Joe's virtual wallet is transferred to SBT's virtual treasury. As a result, Joe's virtual wallet contains 175 $USD.SBT while SBT's virtual treasury contains 4,025 $USD.SBT. The second step (second subtransaction) is that SBT's virtual treasury returns 50 digital US Dollars issued by ATT (50 $USD.ATT) back to ATT and transfers another 25 digital US Dollars issued by SBT (25 $USD.SBT) to ATT. As a result, ATT's virtual treasury contains 3,050 $USD.ATT and 25 $USD.SBT. SBT's virtual wallet contains 4,000 $USD.SBT and zero $USD.ATT. The third step (third subtransaction) is that ATT's virtual treasury transfers 75 digital US Dollars issued by ATT (75 $USD.ATT) to Mary's virtual wallet. As a result, ATT's virtual treasury contains 2,975 $USD.ATT and 25 $USD.SBT. Mary's virtual wallet contains 125 $USD.ATT, only digital property issued by ATT.

At a certain time after several transactions, each virtual wallet still only stores digital properties issued by the digital property issuer with which the virtual wallet is associated. However, digital property issuers very likely would hold digital properties issued by other digital property issuers in their own virtual treasury, e.g. SBT's virtual treasury contains digital US Dollars issued by ATT ($USD.ATT); ATT's virtual treasury contains digital Japanese Yens issued by SBT ($JPY.SBT). In next transaction, when a first digital property issuer (e.g. SBT) needs to transfer a first type of digital property (e.g. digital US Dollars) to a second digital property issuer (e.g. ATT), in one embodiment, the first digital property issuer (e.g. SBT) will, as a priority, transfer (return) the first type of digital property issued by the second digital property issuer (e.g. $USD.ATT) back to the second digital property issuer (e.g. ATT). And if that is not sufficient, then the first digital property issuer (e.g. SBT) will transfer the first type of digital property issued by itself ($USD.SBT) to the second digital property issuer (e.g. ATT) for the remaining amount. Via this process, a digital property issuer can minimize its holding of digital property issued by other digital property issuers and manage the risk of holding a large amount of digital property issued by other digital property issuers.

In addition, in a seventh embodiment (exposure limit transaction), a digital property issuer can set an exposure limit for a specific type of digital property issued by a specific digital property issuer. For example, SBT sets its exposure limit of digital US Dollars issued by ATT to 1M units. As a result, when a transaction will cause the digital property issuer to hold more amount of the specific type of digital property issued by the specific digital property issuer than the exposure limit, the transaction will be rejected and cannot be recorded. For example, if a transaction will cause SBT to hold more than 1M units of $USD.ATT, the transaction will be rejected. Digital property issuers' exposure limits for specific types of digital property issued by other digital property issuers can be recorded in the distributed ledger, such as blockchain. Thus, every full node, including digital property issuers and miners, which has a complete and up-to-date copy of distributed ledger, can independently verify whether a subtransaction causes a digital property issuer to exceed its exposure limit. If that occurs, the whole transaction set will be rejected.

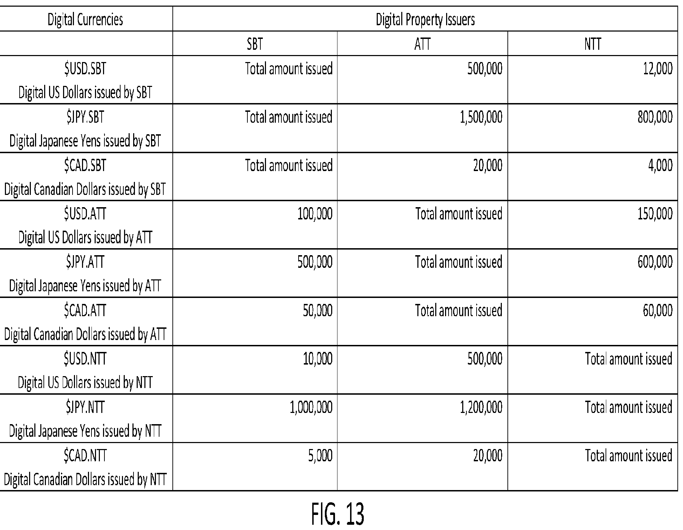

FIG. 13 is an example of exposure limit array showing some digital property issuers' exposure limits of various types of digital properties issued by other digital property issuers. For example, SBT sets its exposure limit of holding $USD.ATT to 100,000 units; of holding $JPY.ATT to 500,000 units; of holding $CAD.ATT (digital Canadian Dollars issued by ATT) to 50,000 units. SBT also sets its exposure limit of holding $USD.NTT (digital US Dollars issued by NTT Group, a Japanese telephone service provider) to 10,000 units; of holding $JPY.NTT to 1M units; of holding $CAD.NTT to 5,000 units. Similarly, ATT sets its exposure limit of holding $USD.SBT to 500,000 units; of holding $JPY.SBT to 1.5M units; of holding $CAD.SBT to 20,000 units. ATT also sets its exposure limit of holding $USD.NTT to 500,000 units; of holding $JPY.NTT to 1.2M units; of holding $CAD.NTT to 20,000 units.

In one embodiment, for a digital property issuer to set an exposure limit, the digital property issuer can send a set-exposure-limit request to a wallet server, which then sends the necessary information to the middleware to generate a raw transaction. The raw transaction is then sent to the wallet server, which passes it to the key server to sign with the virtual treasury's private key. After it returns, the middleware sends the signed exposure limit transaction to the TBCA Network 100 for recording into a new block. Like mint transaction, the exposure limit transaction has an empty input UTXO list because no UTXO should be consumed for this setting. However, an exposure limit transaction input has a ScriptSig containing signature and public key of the virtual treasury of the digital property issuer that sets the exposure limit. The output UTXO of the exposure limit transaction has the value and FC indicating the maximum amount of the specific type of digital property issued by the specific digital property issuer that will be accepted by the requesting digital property issuer. In the example where SBT sets its exposure limit of holding $USD.ATT to 100,000 units, the exposure limit transaction has an output UTXO with the value of 100,000 and FC of 20. This transaction has to be signed with SBT virtual treasury's private key.

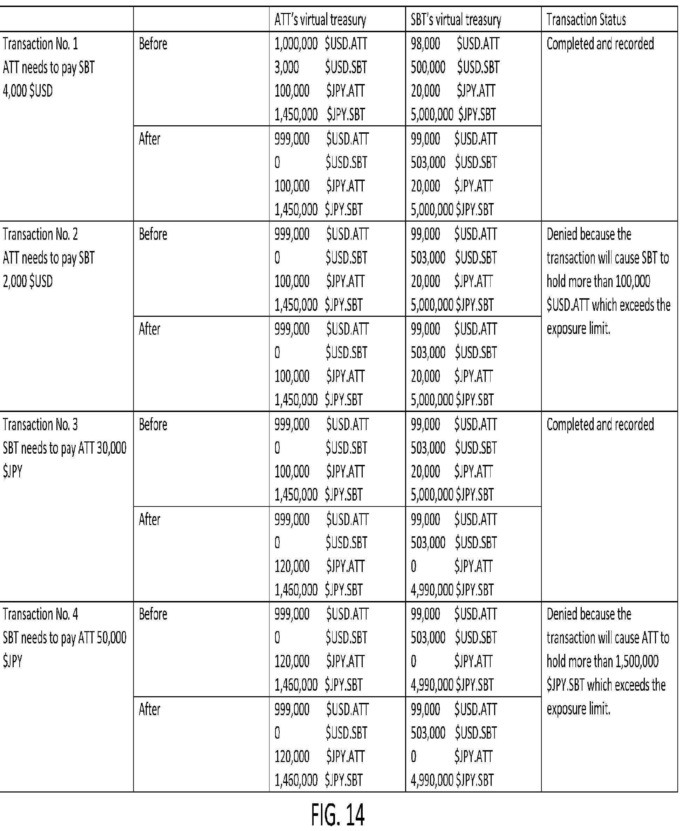

FIG. 14 demonstrates four transactions using the above exposure limit array, two of which are completed and recorded and the other two of which are denied because the transactions will cause a digital property issuer to exceed its exposure limit of holding a specific type of digital property issued by another digital property issuer. In this embodiment, as shown in FIG. 13, SBT sets its exposure limit of holding digital US Dollars issued by ATT ($USD.ATT) to 100,000 units; ATT sets its exposure limit of holding digital Japanese Yens issued by SBT ($JPY.SBT) to 1.5M units. Before Transaction No. 1, ATT's virtual treasury has 1M $USD.ATT, 3,000 $USD.SBT, 100,000 $JPY.ATT, and 1,450,000 $JPY.SBT; SBT's virtual treasury has 98,000 $USD.ATT, 500,000 USD.SBT, 20,000 $JPY.ATT, and 5M $JPY.SBT. Transaction No. 1 requests ATT to transfer 4,000 digital US Dollars ($USD) to SBT. ATT transfers 3,000 $USD.SBT first and then transfer 1,000 $USD.ATT to SBT. Thus, Transaction No. 1 only causes SBT's holding of $USD.ATT to increase 1,000 units to 99,000 units which is still within the exposure limit of 100,000 $USD.ATT. As a result, Transaction No. 1 is completed and recorded. Transaction No. 2 requests ATT to transfer 2,000 $USD to SBT. Since ATT has zero $USD.SBT to return to SBT, ATT has to transfer 2,000 $USD.ATT to SBT. Thus, Transaction No. 2 is denied because it will cause SBT to hold 110,000 $USD.ATT which exceeds SBT's exposure limit of holding 100,000 $USD.ATT. Transaction No. 3 requests SBT to transfer 30,000 digital Japanese Yens ($JPN) to ATT. SBT transfers 20,000 $JPY.ATT first and then transfers 10,000 $JPY.SBT to ATT. Thus, Transaction No. 3 only causes ATT's holding of $JPY.SBT to increase 10,000 units to 1,460,000 units which is still within the exposure limit of 1,500,000 $JPY.ATT. As a result, Transaction No. 3 is completed and recorded. Transaction No. 4 further requests that SBT transfer 50,000 $JPY to ATT. Since SBT has zero $JPY.ATT to return to ATT, SBT has to transfer 50,000 $JPY.SBT to ATT. Thus, Transaction No. 4 is denied because it will cause ATT to hold 1,510,000 $JPY.SBT which exceeds ATT's exposure limit of holding 1,500,000 $JPY.SBT.

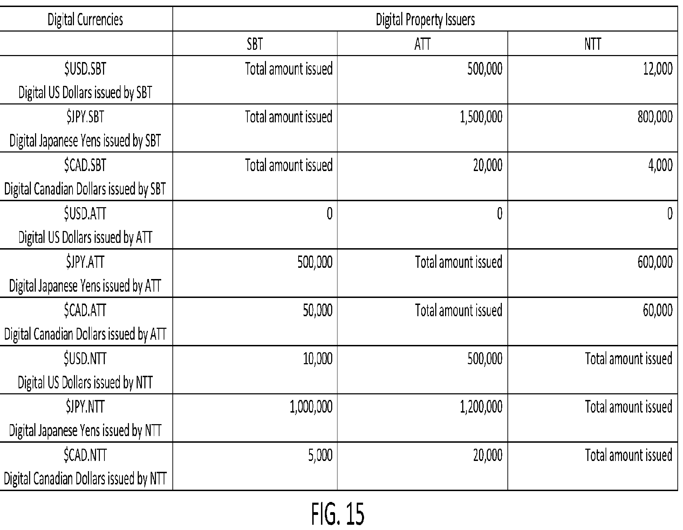

The setting of exposure limits can also help manage the damages and solve the problem when a specific type of digital property issued by a specific digital property issuer is compromised, e.g. private keys to the digital property are stolen or lost. As shown in FIG. 15, in an eighth embodiment where a specific type of digital properties issued by a specific digital property issuer, e.g. digital US Dollars issued by ATT ($USD.ATT), is compromised, e.g. private keys to transfer some digital properties are stolen, the administrator 110 can set all digital property issuers' exposure limit of this type of digital property issued by this specific digital property issuer, e.g. $USD.ATT, to zero so that no digital property issuer would accept the compromised digital property, e.g. $USD.ATT, afterwards. In this exposure limit transaction, the transaction input has a ScriptSig containing signature and public key of the virtual treasury of the administrator 110; the transaction output has a UTXO with the value of zero and the FC of 20. In this situation, the administrator 110 or this specific digital property issuer (e.g. ATT) can set the related exposure limits to zero to reject all the transactions of specific type of digital property (e.g. $USD.ATT) after it is compromised. This digital property issuer, e.g. ATT, can then mint a new version of the same type of digital property, such as $USD2.ATT and deposit, according to its subscribers' information database, the appropriate amount of this new version digital property to its subscribers' virtual wallets to cover any damages caused by the stolen or lost of private keys.

Again, the digital property transaction method and related apparatus described above can be applied to all kinds of digital property, such as digital currencies, e.g. digital US Dollars, digital Japanese Yens, digital Euros, and digital New Taiwan Dollars; digital securities, e.g. digital Apple stocks, digital Google stocks, and digital mutual funds; digital precious metals, e.g. digital gold, digital platinum, and digital silver; and digital futures, e.g. digital futures of coffee beans, soy beans, and corns.

## Claims

1. A method performed by a plurality of nodes (180, 190) of a distributed transaction consensus network (100), wherein the plurality of nodes (180, 190) includes a first digital property issuer (120) and a second digital property issuer (150) which are communicatively connected to each other, the method comprising:
(a) receiving a transaction request, by the distributed transaction consensus network (100), to transfer a first digital property, issued by the first digital property issuer (120) licensed to mint the first digital property which is signed by the first digital property issuer (120) and containing data structure of a financial value, a first type of digital property, and the first digital property issuer (120), from a first virtual wallet (122) associated with the first digital property issuer (120) to a first virtual treasury (121) owned by the first digital property issuer (120), wherein the first digital property is stored in the first virtual wallet (122) by determining that the data structure of the first digital property contains the first digital property issuer (120);
(b) causing a second virtual wallet (152) associated with the second digital property issuer (150) to receive a second digital property, issued by the second digital property issuer (150) licensed to mint the second digital property which is signed by the second digital property issuer (150) and containing data structure of a financial value, a second type of digital property, and the second digital property issuer (150), from a second virtual treasury (151) owned by the second digital property issuer (150), wherein the second digital property is stored in the second virtual wallet (152) by determining that the data structure of the second digital property contains the second digital property issuer (150); and
(c) recording the requested transaction in a distributed ledger.

2. The method of claim 1, wherein the first digital property is one of digital currencies, digital securities, digital bonds, digital futures, and digital precious metals, and the second digital property is one of digital currencies, digital securities, digital bonds, digital futures, and digital precious metals, and/or wherein each of the first type of digital property and the second type of digital property is one of digital US dollar, digital Japanese Yen, digital Canadian dollar, digital Euro, and digital New Taiwan Dollar when both the first digital property and the second digital property are digital currencies.

3. The method of claim 1, wherein the step (b) comprises:
(b1) the first digital property issuer (120) transferring the first digital property from the first virtual wallet (122) owned by a first subscriber to the first virtual treasury (121);
(b2) the first digital property issuer (120) transferring one or more selected digital properties issued by the first digital property issuer (120) or by the second digital property issuer (150) from the first virtual treasury (121) to the second virtual treasury (151), wherein the one or more selected digital properties are selected from digital properties with at least one type of digital property contained in the first virtual treasury (121);
(b3) the second digital property issuer (150) transferring the second digital property from the second virtual treasury (151) to the second virtual wallet (152) owned by a second subscriber.

4. The method of claim 1, wherein the step (b) comprises:
(b1) the first digital property issuer (120) transferring the first digital property from the first virtual wallet (122) owned by a first subscriber to the first virtual treasury (121);
(b2) the first digital property issuer (120) transferring the first digital property issued by the first digital property issuer (120) or by the second digital property issuer (150) from the first virtual treasury (121) to the second virtual treasury (151);
(b3) the second digital property issuer (150) transferring the second digital property from the second virtual treasury (151) to the second virtual wallet (152) owned by a second subscriber, wherein the second type of digital property is the same as the first type of digital property.

5. The method of claim 4, wherein, in the step (b2), the first digital property issuer (120) transfers from the first virtual treasury (121), as a priority, the first digital property to the second virtual treasury (151) when the first virtual treasury (121) contains the first digital property; and the first digital property issuer (120) transfers from the first virtual treasury (121) a remaining amount of the first digital property to the second virtual treasury (151) when the first virtual treasury (121) does not contain a requested amount of the first digital property.

6. The method of claim 4, wherein the second digital property issuer (150) sets an exposure limit of holding the first digital property.

7. The method of claim 6, wherein the transaction request is denied when the transaction causes the second digital property issuer (150) to hold more amount of the first digital property than the exposure limit set by the second digital property issuer (150). and/or wherein the second digital property issuer's exposure limit of holding the first digital property is set to zero when a private key to transfer the first digital property is stolen or lost.

8. The method of claim 1, wherein the first virtual wallet (122) is capable of storing digital properties issued by the first digital property issuer (120) with one or more types of digital property, but not digital property issued by the second digital property issuer (150) with any type; and the second virtual wallet (152) is capable of storing digital properties issued by the second digital property issuer (150) with one or more types of digital property, but not digital property issued by the first digital property issuer (120) with any type.

9. The method of claim 1, wherein the distributed transaction consensus network (100) has an administrator (110).

10. The method of claim 9, wherein the administrator (110) authorizes the first digital property issuer (120) or the second digital property issuer (150) to issue digital properties with one or more types of digital property, and/or wherein the administrator (110) authorizes a miner (130, 140) to generate a new block recording the transaction, and sets rules for miners (130, 140) to compete against or support with each another.

11. The method of claim 1, wherein each of the first digital property issuer (120) and the second digital property issuer (150) is one of a bank, an investment institute, a trading institute, and a telecom operator, and/or wherein the distributed ledger uses a blockchain data structure, and/or wherein the first virtual wallet (122) corresponds to a first phone number and the second virtual wallet (152) corresponds to a second phone number.

12. The method of claim 1 or claim 4, wherein the first digital property issuer (120) is a first telecom operator, the second digital property issuer (150) is a second telecom operator, the first virtual wallet (122) is associated with the first telecom operator, and the second virtual wallet (152) is associated with the second telecom operator.

13. The method of any of the previous claims, wherein each of the first digital property and the second digital property is **characterized by** a combination of at least a type of digital property and its digital property issuer and the combination is represented by at least a symbol for the at least a type of digital property and a symbol for the digital property issuer.

14. A computer program product comprising one or more computer usable non-transitory media having computer readable program code embedded therein for controlling a digital property management system, wherein the computer readable program code configured to cause the digital property management system to execute a transaction process in a distributed transaction consensus network (100) with a plurality of nodes (180, 190) including a first digital property issuer (120) and a second digital property issuer (150) which are communicatively connected to each other, the process comprising:
(a) receiving a transaction request, by the distributed transaction consensus network (100), to transfer a first digital property, issued by the first digital property issuer (120) licensed to mint the first digital property which is signed by the first digital property issuer (120) and containing data structure of a financial value, a first type of digital property, and the first digital property issuer (120), from a first virtual wallet (122) associated with the first digital property issuer (120) to a first virtual treasury (121) owned by the first digital property issuer (120), wherein the first digital property is stored in the first virtual wallet (122) by determining that the data structure of the first digital property contains the first digital property issuer (120);
(b) causing a second virtual wallet (152) associated with the second digital property issuer (150) to receive a second digital property, issued by the second digital property issuer (150) licensed to mint the second digital property which is signed by the second digital property issuer (150) and containing data structure of a financial value, a second type of digital property, and the second digital property issuer (150), from a second virtual treasury (151) owned by the second digital property issuer (150), wherein the second digital property is stored in a second virtual wallet (152) by determining that the data structure of the second digital property contains the second digital property issuer (150); and
(c) recording the requested transaction in a distributed ledger.

15. The computer program product of the previous claim, wherein the step (b) comprises:
(b1) the first digital property issuer (120) transferring the first digital property issued by the first digital property issuer (120) from the first virtual wallet (122) owned by a first subscriber to the first virtual treasury (121);
(b2) the first digital property issuer (120) transferring one or more selected digital properties issued by the first digital property issuer (120) or by the second digital property issuer (150) from the first virtual treasury (121) to the second virtual treasury (151), wherein the one or more selected digital properties are selected from digital properties with at least one type of digital property contained in the first virtual treasury (121);
(b3) the second digital property issuer (150) transferring the second digital property from the second virtual treasury (151) to the second virtual wallet (152) owned by a second subscriber.

16. The computer program product of claim 14, wherein each of the first digital property and the second digital property is **characterized by** a combination of at least a type of digital property and its issuer and the combination is represented by at least a symbol for the at least a type of digital property and a symbol for the digital property issuer.

17. A digital property management system, comprising:
a distributed transaction consensus network (100) with a plurality of nodes (180, 190), wherein the plurality of nodes (180, 190) includes a first digital property issuer (120) and a second digital property issuer (150) which are communicatively connected to each other;
a first virtual wallet (122) associated with the first digital property issuer (120);
a second virtual wallet (152) associated with the second digital property issuer (150); wherein
after the distributed transaction consensus network (100) receives a transaction request, the first digital property issuer (120) transfers a first digital property, issued by the first digital property issuer (120) licensed to mint the first digital property which is signed by the first digital property issuer (120) and containing data structure of a financial value, a first type of digital property, and the first digital property issuer (120), from the first virtual wallet (122) to the first virtual treasury (121) owned by the first digital property issuer, causes the second virtual wallet (152) to receive a second digital property, issued by the second digital property issuer (150) licensed to mint the second digital property which is signed by the second digital property issuer (150) and containing data structure of a financial value, a second type of digital property, and the second digital property issuer (150), from the second virtual treasury (151) owned by the second digital property issuer, and records the requested transaction in a distributed ledger, wherein the first digital property is stored in the first virtual wallet (122) by determining that the data structure of the first digital property contains the first digital property issuer (120), and the second digital property is stored in the second virtual wallet (152) by determining that the data structure of the second digital property contains the second digital property issuer (150).

18. The system of claim 17, wherein the first digital property is one of digital currencies, digital securities, digital bonds, digital futures, and digital precious metals, and the second digital property is one of digital currencies, digital securities, digital bonds, digital futures, and digital precious metals, and/or wherein each of the first type of digital property and the second type of digital property is one of digital US dollar, digital Japanese Yen, digital Canadian dollar, digital Euro, and digital New Taiwan Dollar when both the first digital property and the second digital property are digital currencies.

19. The system of claim 17, wherein:
the first digital property issuer (120) transfers the first digital property from the first virtual wallet (122) owned by a first subscriber to the first virtual treasury (121), and transfers one or more selected digital properties issued by the first digital property issuer (120) or by the second digital property issuer (150) from the first virtual treasury (121) to the second virtual treasury (151), wherein the one or more selected digital properties are selected from digital properties with at least one type of digital property contained in the first virtual treasury (121);
the second digital property issuer (150) transfers the second digital property from the second virtual treasury (151) to the second virtual wallet (152) owned by a second subscriber.

20. The system of claim 17, wherein each of the first digital property and the second digital property is **characterized by** a combination of at least a type of digital property and its digital property issuer and the combination is represented by at least a symbol for the at least one type of digital property and a symbol for the digital property issuer.

## Patentansprüche

1. Verfahren, das von einer Vielzahl von Knoten (180, 190) eines Konsensnetzwerks (100) mit verteilten Transaktionen durchgeführt wird, wobei die Vielzahl von Knoten (180, 190) einen Aussteller (120) von erstem digitalen Eigentum und einen Aussteller (150) von zweitem digitalem Eigentum beinhaltet, die kommunikativ miteinander verbunden sind, wobei das Verfahren Folgendes umfasst:
(a) Empfangen einer Transaktionsanforderung, durch das Konsensnetzwerk (100) mit verteilten Transaktionen, um ein erstes digitales Eigentum, das von dem Aussteller (120) von erstem digitalen Eigentum ausgestellt wurde, der lizenziert ist, um das erste digitale Eigentum zu gestalten, das von dem Aussteller (120) von erstem digitalen Eigentum signiert wurde, und eine Datenstruktur eines finanziellen Werts, einen ersten Typ von digitalem Eigentum und den Aussteller (120) von erstem digitalen Eigentum enthält, von einer ersten virtuellen Geldbörse (122), die mit dem Aussteller (120) von erstem digitalen Eigentum zugeordnet ist, zu einer ersten virtuellen Schatzkammer (121), die dem Aussteller (120) von erstem digitalen Eigentum gehört, zu übertragen, wobei das erste digitale Eigentum in der ersten virtuellen Geldbörse (122) gespeichert wird, indem bestimmt wird, dass die Datenstruktur des ersten digitalen Eigentums den Aussteller (120) von erstem digitalen Eigentum enthält;
(b) Bewirken, dass eine zweite virtuelle Geldbörse (152), die dem Aussteller (150) von zweitem digitalen Eigentum zugeordnet ist, ein zweites digitales Eigentum, das von dem Aussteller (150) von zweitem digitalen Eigentum ausgestellt wurde, der lizenziert ist, um das zweite digitale Eigentum zu gestalten, das von dem Aussteller (150) von zweitem digitalen Eigentum signiert wurde, und eine Datenstruktur eines finanziellen Werts, einen Typ von zweitem digitalen Eigentum und den Aussteller (150) von zweitem digitalen Eigentum enthält, von einer zweiten virtuellen Schatzkammer (151), die dem Aussteller (150) von zweitem digitalen Eigentum gehört, empfängt, wobei das zweite digitale Eigentum in der zweiten virtuellen Geldbörse (152) gespeichert wird, indem bestimmt wird, dass die Datenstruktur des zweiten digitalen Eigentums den Aussteller (150) von zweitem digitalen Eigentum enthält; und
(c) Aufzeichnen der angeforderten Transaktion in einem verteilten Hauptbuch.

2. Verfahren nach Anspruch 1, wobei das erste digitale Eigentum eines von digitalen Währungen, digitalen Wertpapieren, digitalen Anleihen, digitalen Terminkontrakten und digitalen Edelmetallen ist und das zweite digitale Eigentum eines von digitalen Währungen, digitalen Wertpapieren, digitalen Anleihen, digitalen Terminkontrakten und digitalen Edelmetallen ist und/oder wobei jeder des ersten Typs von digitalem Eigentum und des zweiten Typs von digitalem Eigentum eines von digitalem US-Dollar, digitalem japanischen Yen, digitalem kanadischen Dollar, digitalem Euro und digitalem Neuem Taiwan-Dollar ist, wenn es sich sowohl bei dem ersten digitalen Eigentum als auch bei dem zweiten digitalen Eigentum um digitale Währungen handelt.

3. Verfahren nach Anspruch 1, wobei Schritt (b) Folgendes umfasst:
(b1) Übertragen des ersten digitalen Eigentums von der ersten virtuellen Geldbörse (122), die einem ersten Abonnenten gehört, zu der ersten virtuellen Schatzkammer (121) durch den Aussteller (120) von erstem digitalen Eigentum;
(b2) Übertragen eines oder mehrerer ausgewählter digitaler Eigentümer, die durch den Aussteller (120) von erstem digitalen Eigentum oder dem Aussteller (150) von zweitem digitalen Eigentum ausgestellt wurden, von der ersten virtuellen Schatzkammer (121) zu der zweiten virtuellen Schatzkammer (151) durch den Aussteller (120) von erstem digitalen Eigentum, wobei das eine oder die mehreren ausgewählten digitalen Eigentümer ausgewählt sind aus digitalen Eigentümern mit mindestens einem Typ von digitalem Eigentum, der in der ersten virtuellen Schatzkammer (121) enthalten ist;
(b3) Übertragen des zweiten digitalen Eigentums von der zweiten virtuellen Schatzkammer (151) zu der zweiten virtuellen Geldbörse (152), die einem zweiten Abonnenten gehört, durch den Aussteller (150) von zweitem digitalen Eigentum.

4. Verfahren nach Anspruch 1, wobei Schritt (b) Folgendes umfasst:
(b1) Übertragen des ersten digitalen Eigentums von der ersten virtuellen Geldbörse (122), die einem ersten Abonnenten gehört, zu der ersten virtuellen Schatzkammer (121) durch den Aussteller (120) von erstem digitalen Eigentum;
(b2) Übertragen des ersten digitalen Eigentums, das von dem Aussteller (120) von erstem digitalen Eigentum oder dem Aussteller (150) von zweitem digitalen Eigentum ausgestellt wurde, von der ersten virtuellen Schatzkammer (121) zu der zweiten virtuellen Schatzkammer (151) durch den Aussteller (120) von erstem digitalen Eigentum;
(b3) Übertragen des zweiten digitalen Eigentums von der zweiten virtuellen Schatzkammer (151) zu der zweiten virtuellen Geldbörse (152), die einem zweiten Abonnenten gehört, durch den Aussteller (150) von zweitem digitalen Eigentum, wobei der zweite Typ von digitalem Eigentum der gleiche wie der erste Typ von digitalem Eigentum ist.

5. Verfahren nach Anspruch 4, wobei, im Schritt (b2), der Aussteller (120) von erstem digitalen Eigentum als Priorität das erste digitale Eigentum von der ersten virtuellen Schatzkammer (121) zu der zweiten virtuellen Schatzkammer (151) überträgt, wenn die erste virtuelle Schatzkammer (121) das erste digitale Eigentum enthält; und der Aussteller (120) von erstem digitalen Eigentum eine übrige Menge des ersten digitalen Eigentums von der ersten virtuellen Schatzkammer (121) zu der zweiten virtuellen Schatzkammer (151) überträgt, wenn die erste virtuelle Schatzkammer (121) keine angeforderte Menge des ersten digitalen Eigentums enthält.

6. Verfahren nach Anspruch 4, wobei der Aussteller (150) von zweitem digitalen Eigentum einen Expositionsgrenzwert für das Halten des ersten digitalen Eigentums festlegt.

7. Verfahren nach Anspruch 6, wobei die Transaktionsanforderung abgelehnt wird, wenn die Transaktion bewirkt, dass der Aussteller (150) von zweitem digitalen Eigentum eine größere Menge des ersten digitalen Eigentums hält als der von dem Aussteller (150) von zweitem digitalen Eigentum festgelegte Expositionsgrenzwert, und/oder wobei der Expositionsgrenzwert des Ausstellers von zweitem digitalen Eigentum für das Halten des ersten digitalen Eigentums auf Null gesetzt ist, wenn ein privater Schlüssel zum Übertragen des ersten digitalen Eigentums gestohlen wurde oder verlorengegangen ist.

8. Verfahren nach Anspruch 1, wobei die erste virtuelle Geldbörse (122) in der Lage ist, digitale Eigentümer, die von dem Aussteller (120) von erstem digitalen Eigentum mit einem oder mehreren Typen von digitalem Eigentum ausgestellt wurden, aber ohne digitales Eigentum, das von dem Aussteller (150) von zweitem digitalen Eigentum mit einem beliebigen Typ ausgestellt wurde, zu speichern; und die zweite virtuelle Geldbörse (152) in der Lage ist, digitale Eigentümer, die von dem Aussteller (150) von zweitem digitalen Eigentum mit einem oder mehreren Typen von digitalem Eigentum, aber ohne digitales Eigentum, das von dem Aussteller (120) von erstem digitalen Eigentum mit einem beliebigen Typ ausgestellt wurde, zu speichern.

9. Verfahren nach Anspruch 1, wobei das Konsensnetzwerk (100) mit verteilten Transkationen einen Administrator (110) aufweist.

10. Verfahren nach Anspruch 9, wobei der Administrator (110) den Aussteller (120) von erstem digitalen Eigentum oder den Aussteller (150) von zweitem digitalen Eigentum autorisiert, digitale Eigentümer mit einem oder mehreren Typen von digitalem Eigentum auszustellen, und/oder wobei der Administrator (110) einen Miner (130, 140) autorisiert, einen neuen Block zu erzeugen, der die Transaktion protokolliert, und Regeln für Miner (130, 140) festlegt, um miteinander zu konkurrieren oder sich einander zu unterstützen.

11. Verfahren nach Anspruch 1, wobei jeder von dem Aussteller (120) von erstem digitalen Eigentum und dem Aussteller (150) von zweitem digitalen Eigentum eines von einer Bank, einem Investmentinstitut, einem Handelsinstitut und einem Telekommunikationsbetreiber ist und/oder wobei das verteilte Hauptbuch eine Blockchain-Datenstruktur verwendet und/oder wobei die erste virtuelle Geldbörse (122) einer ersten Telefonnummer entspricht und die zweite virtuelle Geldbörse (152) einer zweiten Telefonnummer entspricht.

12. Verfahren nach Anspruch 1 oder Anspruch 4, wobei der Aussteller (120) von erstem digitalen Eigentum ein erster Telekommunikationsbetreiber ist, der Aussteller (150) von zweitem digitalen Eigentum ein zweiter Telekommunikationsbetreiber ist, die erste virtuelle Geldbörse (122) dem ersten Telekommunikationsbetreiber zugeordnet ist und die zweite virtuelle Geldbörse (152) dem zweiten Telekommunikationsbetreiber zugeordnet ist.

13. Verfahren nach einem der vorhergehenden Ansprüche, wobei jedes von dem ersten digitalen Eigentum und dem zweiten digitalen Eigentum durch eine Kombination aus mindestens einem Typ von digitalem Eigentum und seinem Aussteller von digitalem Eigentum gekennzeichnet ist und die Kombination durch mindestens ein Symbol von den mindestens einen Typ von digitalem Eigentum und ein Symbol für den Aussteller von digitalem Eigentum dargestellt ist.

14. Computerprogrammprodukt, umfassend ein oder mehrere computernutzbare nichttransitorische Medien mit darin integriertem computerlesbaren Programmcode zum Steuern eines Systems zur Verwaltung von digitalem Eigentum, wobei der computerlesbare Programmcode dazu konfiguriert ist, zu bewirken, dass das System zur Verwaltung von digitalem Eigentum einen Transaktionsprozess in einem Konsensnetzwerk (100) mit verteilten Transaktionen mit einer Vielzahl von Knoten (180, 190), einschließlich eines Ausstellers (120) von erstem digitalen Eigentum und eines Ausstellers (150) von zweitem digitalen Eigentum, die kommunikativ miteinander verbunden sind, ausführt, wobei der Prozess Folgendes umfasst:
(a) Empfangen einer Transaktionsanforderung, durch das Konsensnetzwerk (100) mit verteilten Transaktionen, um ein erstes digitales Eigentum, das von dem Aussteller (120) von erstem digitalen Eigentum ausgestellt wurde, der lizenziert ist, um das erste digitale Eigentum zu gestalten, das von dem Aussteller (120) von erstem digitalen Eigentum signiert wurde, und eine Datenstruktur eines finanziellen Werts, einen ersten Typ von digitalem Eigentum und den Aussteller (120) von erstem digitalen Eigentum enthält, von einer ersten virtuellen Geldbörse (122), die mit dem Aussteller (120) von erstem digitalen Eigentum zugeordnet ist, zu einer ersten virtuellen Schatzkammer (121), die dem Aussteller (120) von erstem digitalen Eigentum gehört, zu übertragen, wobei das erste digitale Eigentum in der ersten virtuellen Geldbörse (122) gespeichert wird, indem bestimmt wird, dass die Datenstruktur des ersten digitalen Eigentums den Aussteller (120) von erstem digitalen Eigentum enthält;
(b) Bewirken, dass eine zweite virtuelle Geldbörse (152), die dem Aussteller (150) von zweitem digitalen Eigentum zugeordnet ist, ein zweites digitales Eigentum, das von dem Aussteller (150) von zweitem digitalen Eigentum ausgestellt wurde, der lizenziert ist, um das zweite digitale Eigentum zu gestalten, das von dem Aussteller (150) von zweitem digitalen Eigentum signiert wurde, und eine Datenstruktur eines finanziellen Werts, einen Typ von zweitem digitalen Eigentum und den Aussteller (150) von zweitem digitalen Eigentum enthält, von einer zweiten virtuellen Schatzkammer (151), die dem Aussteller (150) von zweitem digitalen Eigentum gehört, empfängt, wobei das zweite digitale Eigentum in einer zweiten virtuellen Geldbörse (152) gespeichert wird, indem bestimmt wird, dass die Datenstruktur des zweiten digitalen Eigentums den Aussteller (150) von zweitem digitalen Eigentum enthält; und
(c) Aufzeichnen der angeforderten Transaktion in einem verteilten Hauptbuch.

15. Computerprogrammprodukt nach dem vorhergehenden Anspruch, wobei der Schritt (b) Folgendes umfasst:
(b1) Übertragen des ersten digitalen Eigentums, das von dem Aussteller (120) von erstem digitalen Eigentum ausgestellt wurde, von der ersten virtuellen Geldbörse (122), die einem ersten Abonnenten gehört, zu der ersten virtuellen Schatzkammer (121) durch den Aussteller (120) von erstem digitalen Eigentum;
(b2) Übertragen eines oder mehrerer ausgewählter digitaler Eigentümer, die durch den Aussteller (120) von erstem digitalen Eigentum oder dem Aussteller (150) von zweitem digitalen Eigentum ausgestellt wurden, von der ersten virtuellen Schatzkammer (121) zu der zweiten virtuellen Schatzkammer (151) durch den Aussteller (120) von erstem digitalen Eigentum, wobei das eine oder die mehreren ausgewählten digitalen Eigentümer ausgewählt sind aus digitalen Eigentümern mit mindestens einem Typ von digitalem Eigentum, der in der ersten virtuellen Schatzkammer (121) enthalten ist;
(b3) Übertragen des zweiten digitalen Eigentums von der zweiten virtuellen Schatzkammer (151) zu der zweiten virtuellen Geldbörse (152), die einem zweiten Abonnenten gehört, durch den Aussteller (150) von zweitem digitalen Eigentum.

16. Computerprogrammprodukt nach Anspruch 14, wobei jedes von dem ersten digitalen Eigentum und dem zweiten digitalen Eigentum durch eine Kombination aus mindestens einem Typ von digitalem Eigentum und seinem Aussteller gekennzeichnet ist und die Kombination durch mindestens ein Symbol von den mindestens einen Typ von digitalem Eigentum und ein Symbol für den Aussteller von digitalem Eigentum dargestellt ist.

17. System zur Verwaltung von digitalem Eigentum, umfassend:
ein Konsensnetzwerk (100) mit verteilten Transaktionen mit einer Vielzahl von Knoten (180, 190), wobei die Vielzahl von Knoten (180, 190) einen Aussteller (120) von erstem digitalen Eigentum und einen Aussteller (150) von zweitem digitalem Eigentum beinhaltet, die kommunikativ miteinander verbunden sind;
eine erste virtuelle Geldbörse (122), die dem Aussteller (120) von erstem digitalen Eigentum zugeordnet ist;
eine zweite virtuelle Geldbörse (152), die dem Aussteller (150) von zweitem digitalen Eigentum zugeordnet ist; wobei
nachdem das Konsensnetzwerk (100) mit verteilten Transaktionen eine Transaktionsanforderung empfangen hat, der Aussteller (120) von erstem digitalen Eigentum ein erstes digitales Eigentum, das von dem Aussteller (120) von erstem digitalen Eigentum ausgestellt wurde, der lizensiert ist, um das erste digitale Eigentum zu gestalten, das von dem Aussteller (120) von erstem digitalen Eigentum signiert wurde, und eine Datenstruktur eines finanziellen Werts, einen ersten Typ von digitalem Eigentum und den Aussteller (120) von erstem digitalen Eigentum enthält, von der ersten virtuellen Geldbörse (122) zu der ersten virtuellen Schatzkammer (121), die dem Aussteller von erstem digitalen Eigentum gehört, überträgt, bewirkt, dass die zweite virtuelle Geldbörse (152) ein zweites digitales Eigentum, das von dem Aussteller (150) von zweitem digitalen Eigentum ausgestellt wurde, der lizensiert ist, um das zweite digitale Eigentum zu gestalten, das von dem Aussteller (150) von zweitem digitalen Eigentum signiert wurde, und eine Datenstruktur eines finanziellen Werts, einen zweiten Typ von digitalem Eigentum und den Aussteller (150) von zweitem digitalen Wert enthält, von der zweiten virtuellen Schatzkammer (151), die dem Aussteller von zweitem digitalen Eigentum gehört, empfängt, und die angeforderte Transaktion in einem verteilten Hauptbuch protokolliert, wobei das erste digitale Eigentum in der ersten virtuellen Geldbörse (122) gespeichert wird, indem bestimmt wird, dass die Datenstruktur des ersten digitalen Eigentums den Aussteller (120) von erstem digitalen Eigentum enthält, und das zweite digitale Eigentum in der zweiten virtuellen Geldbörse (152) gespeichert wird, indem bestimmt wird, dass die Datenstruktur des zweiten digitalen Eigentums den Aussteller (150) von zweitem digitalen Eigentum enthält.

18. System nach Anspruch 17, wobei das erste digitale Eigentum eines von digitalen Währungen, digitalen Wertpapieren, digitalen Anleihen, digitalen Terminkontrakten und digitalen Edelmetallen ist und das zweite digitale Eigentum eines von digitalen Währungen, digitalen Wertpapieren, digitalen Anleihen, digitalen Terminkontrakten und digitalen Edelmetallen ist und/oder wobei jeder des ersten Typs von digitalem Eigentum und des zweiten Typs von digitalem Eigentum eines von digitalem US-Dollar, digitalem japanischen Yen, digitalem kanadischen Dollar, digitalem Euro und digitalem Neuem Taiwan-Dollar ist, wenn es sich sowohl bei dem ersten digitalen Eigentum als auch bei dem zweiten digitalen Eigentum um digitale Währungen handelt.

19. System nach Anspruch 17, wobei:
der Aussteller (120) von erstem digitalen Eigentum das erste digitale Eigentum von der ersten virtuellen Geldbörse (122), die einem ersten Abonnenten gehört, zu der ersten virtuellen Schatzkammer (121) überträgt und ein oder mehrere ausgewählte digitale Eigentümer, die von dem Aussteller (120) von erstem digitalen Eigentum oder von dem Aussteller (150) von zweitem digitalen Eigentum ausgestellt wurden, von der ersten virtuellen Schatzkammer (121) zu der zweiten virtuellen Schatzkammer (151) überträgt, wobei das eine oder die mehreren ausgewählten digitalen Eigentümer ausgewählt sind aus digitalen Eigentümern mit mindestens einem Typ von digitalem Eigentum, der in der ersten virtuellen Schatzkammer (121) enthalten ist;
der Aussteller (150) von zweitem digitalen Eigentum das zweite digitale Eigentum von der zweiten virtuellen Schatzkammer (151) zu der zweiten virtuellen Geldbörse (152), die einem zweiten Abonnenten gehört, überträgt.

20. System nach Anspruch 17, wobei jedes von dem ersten digitalen Eigentum und dem zweiten digitalen Eigentum durch eine Kombination aus mindestens einem Typ von digitalem Eigentum und seinem Aussteller von digitalem Eigentum gekennzeichnet ist und die Kombination durch mindestens ein Symbol von den mindestens einen Typ von digitalem Eigentum und ein Symbol für den Aussteller von digitalem Eigentum dargestellt ist.

## Revendications

1. Procédé réalisé par une pluralité de nœuds (180, 190) d'un réseau de consensus de transactions distribué (100), dans lequel la pluralité de nœuds (180, 190) inclut un premier émetteur de propriété numérique (120) et un second émetteur de propriété numérique (150) qui sont connectés en communication l'un à l'autre, le procédé comprenant les étapes consistant à :
(a) faire recevoir une requête de transaction par le réseau de consensus de transactions distribué (100), pour transférer une première propriété numérique, émise par le premier émetteur de propriété numérique (120) homologué pour frapper la première propriété numérique qui est signée par le premier émetteur de propriété numérique (120) et contenant une structure de données d'une valeur financière, un premier type de propriété numérique et le premier émetteur de propriété numérique (120), depuis un premier portefeuille virtuel (122) associé au premier émetteur de propriété numérique (120) vers une première trésorerie virtuelle (121) possédée par le premier émetteur de propriété numérique (120), dans lequel la première propriété numérique est stockée dans le premier portefeuille virtuel (122) en déterminant que la structure de données de la première propriété numérique contient le premier émetteur de propriété numérique (120) ;
(b) amener un second portefeuille virtuel (152) associé au second émetteur de propriété numérique (150) à recevoir une seconde propriété numérique, émise par le second émetteur de propriété numérique (150) homologué pour frapper la seconde propriété numérique qui est signée par le second émetteur de propriété numérique (150) et contenant une structure de données d'une valeur financière, un second type de propriété numérique et le second émetteur de propriété numérique (150), depuis une seconde trésorerie virtuelle (151) possédée par le second émetteur de propriété numérique (150), dans lequel la seconde propriété numérique est stockée dans le second portefeuille virtuel (152) en déterminant que la structure de données de la seconde propriété numérique contient le second émetteur de propriété numérique (150) ; et
(c) enregistrer la transaction requise dans un registre distribué.

2. Procédé selon la revendication 1, dans lequel la première propriété numérique est une parmi des monnaies numériques, des sécurités numériques, des obligations numériques, des futurs numériques et des métaux précieux numériques, et la seconde propriété numérique est une parmi des monnaies numériques, des sécurités numériques, des obligations numériques, des futurs numériques et des métaux précieux numériques, et/ou dans lequel chacun parmi le premier type de propriété numérique et le second type de propriété numérique est un parmi le dollar US numérique, le yen japonais numérique, le dollar canadien numérique, l'euro numérique et le nouveau dollar de Taïwan numérique lorsqu'à la fois la première propriété numérique et la seconde propriété numérique sont des monnaies numériques.

3. Procédé selon la revendication 1, dans lequel l'étape (b) comprend les étapes consistant à :
(b1) faire transférer par le premier émetteur de propriété numérique (120) la première propriété numérique depuis le premier portefeuille virtuel (122) possédé par un premier souscripteur vers la première trésorerie virtuelle (121) ;
(b2) faire transférer par le premier émetteur de propriété numérique (120) une ou plusieurs propriétés numériques choisies émises par le premier émetteur de propriété numérique (120) ou par le second émetteur de propriété numérique (150) depuis la première trésorerie virtuelle (121) vers la seconde trésorerie virtuelle (151), dans lequel la ou les propriétés numériques choisies sont choisies parmi des propriétés numériques avec au moins un type de propriété numérique contenues dans la première trésorerie virtuelle (121) ;
(b3) faire transférer par le second émetteur de propriété numérique (150) la seconde propriété numérique depuis la seconde trésorerie virtuelle (151) vers le second portefeuille virtuel (152) possédé par un second souscripteur.

4. Procédé selon la revendication 1, dans lequel l'étape (b) comprend les étapes consistant à :
(b1) faire transférer par le premier émetteur de propriété numérique (120) la première propriété numérique depuis le premier portefeuille virtuel (122) possédé par un premier souscripteur vers la première trésorerie virtuelle (121) ;
(b2) faire transférer par le premier émetteur de propriété numérique (120) la première propriété numérique émise par le premier émetteur de propriété numérique (120) ou par le second émetteur de propriété numérique (150) depuis la première trésorerie virtuelle (121) vers la seconde trésorerie virtuelle (151) ;
(b3) faire transférer par le second émetteur de propriété numérique (150) la seconde propriété numérique depuis la seconde trésorerie virtuelle (151) vers le second portefeuille virtuel (152) possédé par un second souscripteur, dans lequel le second type de propriété numérique est identique au premier type de propriété numérique.

5. Procédé selon la revendication 4, dans lequel, dans l'étape (b2), le premier émetteur de propriété numérique (120) transfère depuis la première trésorerie virtuelle (121), en tant que priorité, la première propriété numérique vers la seconde trésorerie virtuelle (151) lorsque la première trésorerie virtuelle (121) contient la première propriété numérique ; et le premier émetteur de propriété numérique (120) transfère depuis la première trésorerie virtuelle (121) une quantité restante de la première propriété numérique vers la seconde trésorerie virtuelle (151) lorsque la première trésorerie virtuelle (121) ne contient pas une quantité requise de la première propriété numérique.

6. Procédé selon la revendication 4, dans lequel le second émetteur de propriété numérique (150) définit une limite d'exposition de détention de la première propriété numérique.

7. Procédé selon la revendication 6, dans lequel la requête de transaction est refusée lorsque la transaction amène le second émetteur de propriété numérique (150) à détenir une quantité de la première propriété numérique supérieure à la limite d'exposition définie par le second émetteur de propriété numérique (150), et/ou dans lequel la limite d'exposition du second émetteur de propriété numérique pour la détention de la première propriété numérique est définie à zéro lorsqu'une clé privée pour transférer la première propriété numérique est volée ou perdue.

8. Procédé selon la revendication 1, dans lequel le premier portefeuille virtuel (122) est capable de stocker les propriétés numériques émises par le premier émetteur de propriété numérique (120) avec un ou plusieurs types de propriété numérique, mais pas la propriété numérique émise par le second émetteur de propriété numérique (150) avec n'importe quel type ; et le second portefeuille virtuel (152) est capable de stocker des propriétés numériques émises par le second émetteur de propriété numérique (150) avec plusieurs types de propriété numérique, mais pas la propriété numérique émise par le premier émetteur de propriété numérique (120) avec n'importe quel type.

9. Procédé selon la revendication 1, dans lequel le réseau de consensus de transactions distribué (100) a un administrateur (110).

10. Procédé selon la revendication 9, dans lequel l'administrateur (110) autorise le premier émetteur de propriété numérique (120) ou le second émetteur de propriété numérique (150) à émettre des propriétés numériques avec un ou plusieurs types de propriété numérique, et/ou dans lequel l'administrateur (110) autorise un dispositif de minage (130, 140) à générer un nouveau bloc enregistrant la transaction, et définit des règles pour que les dispositifs de minage (130, 140) entrent en compétition les uns avec les autres ou se soutiennent les uns les autres.

11. Procédé selon la revendication 1, dans lequel chacun parmi le premier émetteur de propriété numérique (120) et le second émetteur de propriété numérique (150) est un parmi une banque, un organisme d'investissement, un organisme d'échange et un opérateur de télécommunications, et/ou dans lequel le registre distribué utilise une structure de données de blockchain, et/ou dans lequel le premier portefeuille virtuel (122) correspond à un premier numéro de téléphone et le second portefeuille virtuel (152) correspond à un second numéro de téléphone.

12. Procédé selon la revendication 1 ou la revendication 4, dans lequel le premier émetteur de propriété numérique (120) est un premier opérateur de télécommunications, le second émetteur de propriété numérique (150) est un second opérateur de télécommunications, le premier portefeuille virtuel (122) est associé au premier opérateur de télécommunications, et le second portefeuille virtuel (152) est associé au second opérateur de télécommunications.

13. Procédé selon l'une quelconque des revendications précédentes, dans lequel chacune parmi la première propriété numérique et la seconde propriété numérique est **caractérisée par** une combinaison d'au moins un type de propriété numérique et de son émetteur de propriété numérique et la combinaison est représentée par au moins un symbole pour l'au moins un type de propriété numérique et un symbole pour l'émetteur de propriété numérique.

14. Produit de programmes informatiques comprenant un ou plusieurs supports non transitoires utilisables par ordinateur ayant un code de programme lisible par ordinateur intégré à ceux-ci pour commander un système de gestion de propriété numérique, dans lequel le code de programme lisible par ordinateur est configuré pour amener le système de gestion de propriété numérique à exécuter un processus de transaction dans un réseau de consensus de transactions distribué (100) avec une pluralité de nœuds (180, 190) incluant un premier émetteur de propriété numérique (120) et un second émetteur de propriété numérique (150) qui sont connectés en communication l'un avec l'autre, le processus comprenant les étapes consistant à :
(a) faire recevoir une requête de transaction par le réseau de consensus de transactions distribué (100), pour transférer une première propriété numérique, émise par le premier émetteur de propriété numérique (120) homologué pour frapper la première propriété numérique qui est signée par le premier émetteur de propriété numérique (120) et contenant une structure de données d'une valeur financière, un premier type de propriété numérique et le premier émetteur de propriété numérique (120), depuis un premier portefeuille virtuel (122) associé au premier émetteur de propriété numérique (120) vers une première trésorerie virtuelle (121) possédée par le premier émetteur de propriété numérique (120), dans lequel la première propriété numérique est stockée dans le premier portefeuille virtuel (122) en déterminant que la structure de données de la première propriété numérique contient le premier émetteur de propriété numérique (120) ;
(b) amener un second portefeuille virtuel (152) associé au second émetteur de propriété numérique (150) à recevoir une seconde propriété numérique, émise par le second émetteur de propriété numérique (150) homologué pour frapper la seconde propriété numérique qui est signée par le second émetteur de propriété numérique (150) et contenant une structure de données d'une valeur financière, un second type de propriété numérique et le second émetteur de propriété numérique (150), depuis une seconde trésorerie virtuelle (151) possédée par le second émetteur de propriété numérique (150), dans lequel la seconde propriété numérique est stockée dans un second portefeuille virtuel (152) en déterminant que la structure de données de la seconde propriété numérique contient le second émetteur de propriété numérique (150) ; et
(c) enregistrer la transaction requise dans un registre distribué.

15. Produit de programme informatique selon la revendication précédente, dans lequel l'étape (b) comprend les étapes consistant à :
(b1) faire transférer par le premier émetteur de propriété numérique (120) la première propriété numérique émise par le premier émetteur de propriété numérique (120) depuis le premier portefeuille virtuel (122) possédé par un premier souscripteur à la première trésorerie virtuelle (121) ;
(b2) faire transférer par le premier émetteur de propriété numérique (120) une ou plusieurs propriétés numériques choisies émises par le premier émetteur de propriété numérique (120) ou par le second émetteur de propriété numérique (150) depuis la première trésorerie virtuelle (121) vers la seconde trésorerie virtuelle (151), dans lequel la ou les propriétés numériques choisies sont choisies parmi des propriétés numériques avec au moins un type de propriété numérique contenues dans la première trésorerie virtuelle (121) ;
(b3) faire transférer par le second émetteur de propriété numérique (150) la seconde propriété numérique depuis la seconde trésorerie virtuelle (151) vers le second portefeuille virtuel (152) possédé par un second souscripteur.

16. Produit de programme informatique selon la revendication 14, dans lequel chacune parmi la première propriété numérique et la seconde propriété numérique est **caractérisée par** une combinaison d'au moins un type de propriété numérique et de son émetteur et la combinaison est représentée par au moins un symbole pour l'au moins un type de propriété numérique et un symbole pour l'émetteur de propriété numérique.

17. Système de gestion de propriété numérique, comprenant :
un réseau de consensus de transactions distribué (100) avec une pluralité de nœuds (180, 190), dans lequel la pluralité de nœuds (180, 190) inclut un premier émetteur de propriété numérique (120) et un second émetteur de propriété numérique (150) qui sont connectés en communication l'un à l'autre ;
un premier portefeuille virtuel (122) associé au premier émetteur de propriété numérique (120) ;
un second portefeuille virtuel (152) associé au second émetteur de propriété numérique (150) ; dans lequel
après que le réseau de consensus de transactions distribué (100) reçoit une requête de transaction, le premier émetteur de propriété numérique (120) transfert une première propriété numérique, émise par le premier émetteur de propriété numérique (120) homologué pour frapper la première propriété numérique qui est signée par le premier émetteur de propriété numérique (120) et contenant une structure de données d'une valeur financière, un premier type de propriété numérique et le premier émetteur de propriété numérique (120), depuis le premier portefeuille virtuel (122) vers la première trésorerie virtuelle (121) possédée par le premier émetteur de propriété numérique, amène le second portefeuille virtuel (152) à recevoir une seconde propriété numérique, émise par le second émetteur de propriété numérique (150) homologué pour frapper la seconde propriété numérique qui est signée par le second émetteur de propriété numérique (150) et contenant une structure de données d'une valeur financière, un second type de propriété numérique et le second émetteur de propriété numérique (150), depuis la seconde trésorerie virtuelle (151) possédée par le second émetteur de propriété numérique, et enregistre la transaction requise dans un registre distribué, dans lequel la première propriété numérique est stockée dans le premier portefeuille virtuel (122) en déterminant que la structure de données de la première propriété numérique contient le premier émetteur de propriété numérique (120), et la seconde propriété numérique est stockée dans le second portefeuille virtuel (152) en déterminant que la structure de données de la seconde propriété numérique contient le second émetteur de propriété numérique (150).

18. Système selon la revendication 17, dans lequel la première propriété numérique est une parmi des monnaies numériques, des sécurités numériques, des obligations numériques, des futurs numériques et des métaux précieux numériques, et la seconde propriété numérique est une parmi des monnaies numériques, des sécurités numériques, des obligations numériques, des futurs numériques et des métaux précieux numériques, et/ou dans lequel chacun parmi le premier type de propriété numérique et le second type de propriété numérique est un parmi le dollar US numérique, le yen japonais numérique, le dollar canadien numérique, l'euro numérique et le nouveau dollar de Taïwan numérique lorsqu'à la fois la première propriété numérique et la seconde propriété numérique sont des monnaies numériques.

19. Système selon la revendication 17, dans lequel :
le premier émetteur de propriété numérique (120) transfère la première propriété numérique depuis le premier portefeuille virtuel (122) possédé par un premier souscripteur vers la première trésorerie virtuelle (121), et transfère une ou plusieurs propriétés numériques choisies émises par le premier émetteur de propriété numérique (120) ou par le second émetteur de propriété numérique (150) depuis la première trésorerie virtuelle (121) vers la seconde trésorerie virtuelle (151), dans lequel la ou les propriétés numériques choisies sont choisies parmi des propriétés numériques avec au moins un type de propriété numérique contenues dans la première trésorerie virtuelle (121) ;
le second émetteur de propriété numérique (150) transfère la seconde propriété numérique depuis la seconde trésorerie virtuelle (151) vers le second portefeuille virtuel (152) possédé par un second souscripteur.

20. Système selon la revendication 17, dans lequel chacune parmi la première propriété numérique et la seconde propriété numérique est **caractérisée par** une combinaison d'au moins un type de propriété numérique et de son émetteur de propriété numérique et la combinaison est représentée par au moins un symbole pour l'au moins un type de propriété numérique et un symbole pour l'émetteur de propriété numérique.
